# EUROPEAN PATENT APPLICATION

(11) **EP 4 723 751 A1**
(43) Date of publication of application: **08.04.2026**
(21) Application number: 24815935.2
(22) Date of filing: 03.06.2024
(51) Int. Cl.: H04W 52/02, H04W 76/28, H04W 72/25, H04W 8/26, H04W 72/50, H04W 74/0808, H04W 92/18

(54) **METHOD AND DEVICE FOR PERFORMING COMMUNICATION IN WIRELESS COMMUNICATION SYSTEM**

(30) Priority: 02.06.2023 KR 20230071864
(71) Applicant: LG Electronics Inc., Yeongdeungpo-gu Seoul 07336 (KR)
(72) Inventor: PARK, Giwon, Seoul 06772 (KR); LEE, Seungmin, Seoul 06772 (KR); BACK, Seoyoung, Seoul 06772 (KR)
(74) Representative: Plasseraud IP
(86) International application number: PCT/KR2024/007556
(87) International publication number: WO 2024/248561

(57) **Abstract**

Provided are a method for a first device to perform wireless communication and a device for supporting same. The method may comprise the steps of: transmitting, on a physical control channel to a second device, first control information for scheduling a physical shared channel and second control information; and transmitting, on the physical shared channel to the second device, the second control information including sharing information, which includes data and an additional identity (ID) for channel occupancy time (COT) sharing related to a third device, about channel occupancy. For example, a timer related to an active time of the third device may start on the basis of the transmission of the second control information including the sharing information, which includes the data and the additional ID for COT sharing related to the third device, about channel occupancy.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL PROBLEM

The present disclosure provides a method and device capable of effectively providing services in a wireless communication system. In particular, the present disclosure provides a method and device for communication.

### TECHNICAL SOLUTION

Based on an embodiment, a method for performing wireless communication by a first device may be provided. The method may include: transmitting, to a second device, first control information for scheduling of a physical shared channel and of second control information on a physical control channel; and transmitting, to the second device, data and the second control information and sharing information for channel occupancy including an additional identity (ID) related to channel occupancy time (COT) sharing related to a third device on the physical shared channel. For example, based on that the data and the second control information including the sharing information for channel occupancy and the additional ID for the COT sharing related to the third device has been transmitted, a timer related to an active time of the third device may be initiated.

Based on an embodiment, a first device adapted to perform wireless communication may be provided. The first device may include: at least one transceiver; at least one processor; and at least one memory connected to the at least one processor and storing instructions, and the instructions, based on being executed by the at least one processor, may cause the first device to perform operations comprising: transmitting, to a second device, first control information for scheduling of a physical shared channel and of second control information on a physical control channel; and transmitting, to the second device, data and the second control information and sharing information for channel occupancy including an additional identity (ID) related to channel occupancy time (COT) sharing related to a third device on the physical shared channel. For example, based on that the data and the second control information including the sharing information for channel occupancy and the additional ID for the COT sharing related to the third device has been transmitted, a timer related to an active time of the third device may be initiated.

Based on an embodiment, a processing device adapted to control a first device may be provided. For example, the processing device may include: at least one processor; and at least one memory connected to the at least one processor and storing instructions, and the instructions, based on being executed by the at least one processor, may cause the first device to perform operations comprising: transmitting, to a second device, first control information for scheduling of a physical shared channel and of second control information on a physical control channel; and transmitting, to the second device, data and the second control information and sharing information for channel occupancy including an additional identity (ID) related to channel occupancy time (COT) sharing related to a third device on the physical shared channel. For example, based on that the data and the second control information including the sharing information for channel occupancy and the additional ID for the COT sharing related to the third device has been transmitted, a timer related to an active time of the third device may be initiated.

Based on an embodiment, a non-transitory computer-readable storage medium storing instructions may be provided. The instructions, based on being executed, may cause a first device to perform operations comprising: transmitting, to a second device, first control information for scheduling of a physical shared channel and of second control information on a physical control channel; and transmitting, to the second device, data and the second control information and sharing information for channel occupancy including an additional identity (ID) related to channel occupancy time (COT) sharing related to a third device on the physical shared channel. For example, based on that the data and the second control information including the sharing information for channel occupancy and the additional ID for the COT sharing related to the third device has been transmitted, a timer related to an active time of the third device may be initiated.

Based on an embodiment, a method for performing wireless communication by a second device may be provided. The method may include: receiving, from a first device, first control information for scheduling of a physical shared channel and of second control information on a physical control channel; and receiving, from the first device, data and the second control information and sharing information for channel occupancy including an additional identity (ID) related to channel occupancy time (COT) sharing related to a third device on the physical shared channel. For example, based on that the data and the second control information including the sharing information for channel occupancy and the additional ID for the COT sharing related to the third device has been received, a timer related to an active time of the third device may be initiated.

Based on an embodiment, a second device adapted to perform wireless communication may be provided. The second device may include: at least one transceiver; at least one processor; and at least one memory connected to the at least one processor and storing instructions, and the instructions, based on being executed by the at least one processor, may cause the second device to perform operations comprising: receiving, from a first device, first control information for scheduling of a physical shared channel and of second control information on a physical control channel; and receiving, from the first device, data and the second control information and sharing information for channel occupancy including an additional identity (ID) related to channel occupancy time (COT) sharing related to a third device on the physical shared channel. For example, based on that the data and the second control information including the sharing information for channel occupancy and the additional ID for the COT sharing related to the third device has been received, a timer related to an active time of the third device may be initiated.

Based on an embodiment, a processing device adapted to control a second device may be provided. For example, the processing device may include: at least one processor; and at least one memory connected to the at least one processor and storing instructions, and the instructions, based on being executed by the at least one processor, may cause the second device to perform operations comprising: receiving, from a first device, first control information for scheduling of a physical shared channel and of second control information on a physical control channel; and receiving, from the first device, data and the second control information and sharing information for channel occupancy including an additional identity (ID) related to channel occupancy time (COT) sharing related to a third device on the physical shared channel. For example, based on that the data and the second control information including the sharing information for channel occupancy and the additional ID for the COT sharing related to the third device has been received, a timer related to an active time of the third device may be initiated.

Based on an embodiment, a non-transitory computer-readable storage medium storing instructions may be provided. The instructions, based on being executed, may cause a second device to perform operations comprising: receiving, from a first device, first control information for scheduling of a physical shared channel and of second control information on a physical control channel; and receiving, from the first device, data and the second control information and sharing information for channel occupancy including an additional identity (ID) related to channel occupancy time (COT) sharing related to a third device on the physical shared channel. For example, based on that the data and the second control information including the sharing information for channel occupancy and the additional ID for the COT sharing related to the third device has been received, a timer related to an active time of the third device may be initiated.

### ADVANTAGEOUS EFFECTS

The present disclosure may provide a method and device capable of effectively providing services in a wireless communication system. For example, through embodiments proposed by the present disclosure, communication may be efficiently performed.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows an example of an NTN typical scenario based on a transparent payload, based on an embodiment of the present disclosure.
FIG. 4 shows an example of an NTN typical scenario based on a regenerative payload, based on an embodiment of the present disclosure.
FIG. 5 shows an example of a sensing operation, based on an embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows an interlaced RB, based on an embodiment of the present disclosure.
FIG. 10 shows an example of a wireless communication system supporting an unlicensed band, based on an embodiment of the present disclosure.
FIG. 11 shows a method of occupying resources in an unlicensed band, based on an embodiment of the present disclosure.
FIG. 12 shows a case in which a plurality of LBT-SBs are included in an unlicensed band, based on an embodiment of the present disclosure.
FIG. 13 shows CAP operations performed by a base station to transmit a downlink signal through an unlicensed band, based on an embodiment of the present disclosure.
FIG. 14 shows type 1 CAP operations performed by a UE to transmit an uplink signal, based on an embodiment of the present disclosure.
FIG. 15 shows a channel access procedure, based on an embodiment of the present disclosure.
FIG. 16 shows a procedure related to LBT detection, based on an embodiment of the present disclosure.
FIG. 17 shows an embodiment related to a transmission operation of a UE within a shared COT, based on an embodiment of the present disclosure.
FIG. 18 shows an embodiment related to an initiation of a timer related to an active time, based on an embodiment of the present disclosure.
FIG. 19 shows an embodiment related to an initiation of a timer related to an active time, based on an embodiment of the present disclosure.
FIG. 20 shows a method for a first device to perform wireless communication, based on an embodiment of the present disclosure.
FIG. 21 shows a method for a second device to perform wireless communication, based on an embodiment of the present disclosure.
FIG. 22 shows a communication system 1, based on an embodiment of the present disclosure.
FIG. 23 shows wireless devices, based on an embodiment of the present disclosure.
FIG. 24 shows a signal process circuit for a transmission signal, based on an embodiment of the present disclosure.
FIG. 25 shows another example of a wireless device, based on an embodiment of the present disclosure.
FIG. 26 shows a hand-held device, based on an embodiment of the present disclosure.
FIG. 27 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configure/configured or define/defined" may be interpreted as being configured or pre-configured for a device through pre-defined signaling (e.g., SIB, MAC, RRC) from a base station or a network. In the present disclosure, "configure/configured or define/defined" may be interpreted as being pre-configured for a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

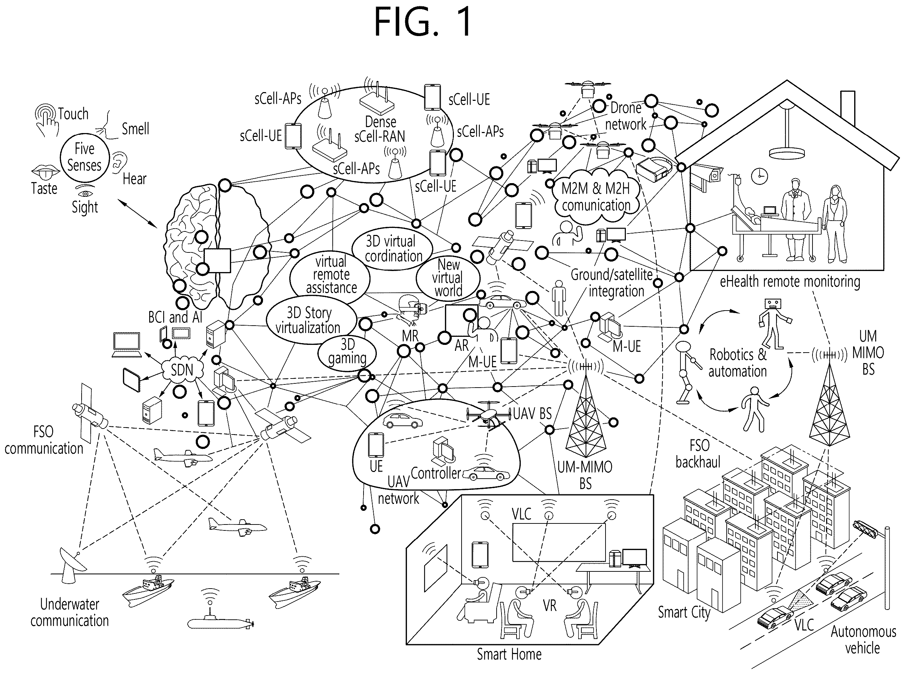

FIG. 1 shows a communication structure providable in a 6G system, based on an embodiment of the present disclosure. The embodiment of FIG. 1 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

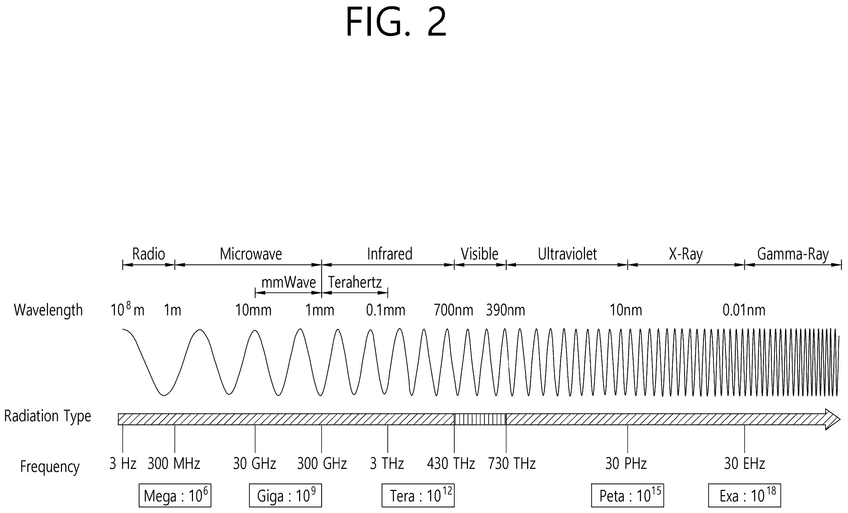

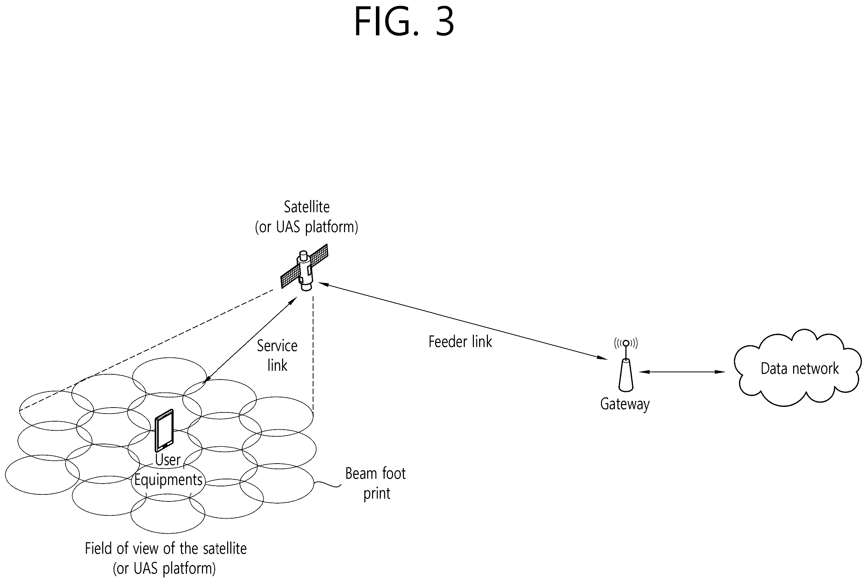

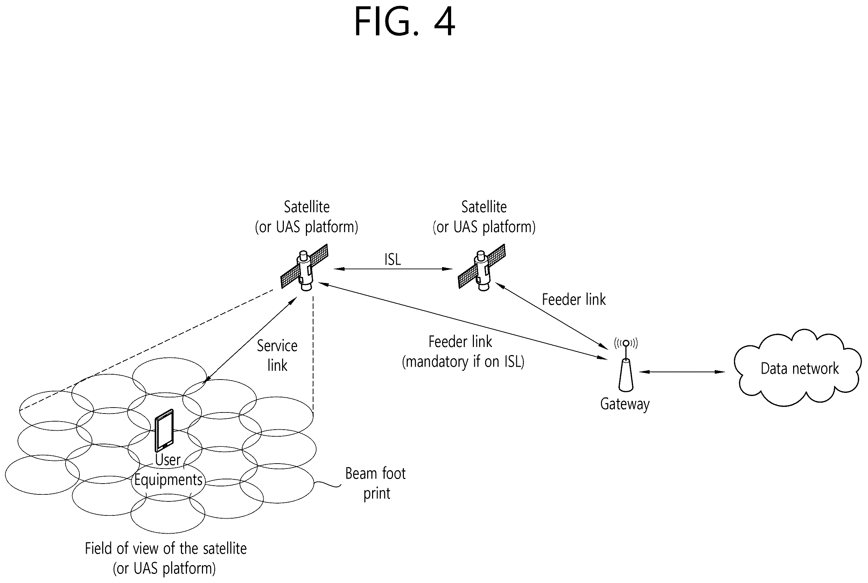

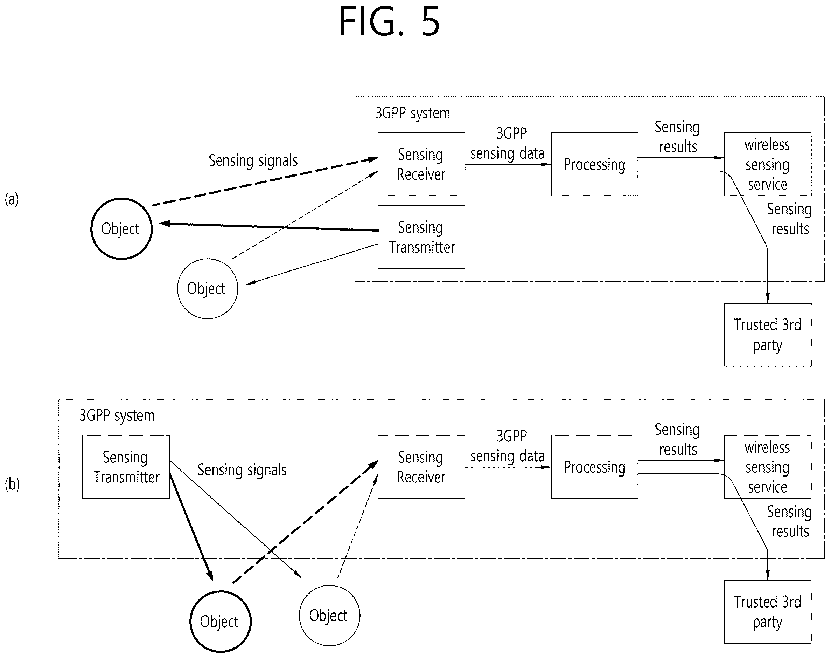

Core implementation technology of 6G system is described below.
- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Advanced air mobility (AAM): An AAM is a superordinate concept of urban air mobility (UAM), which is air transportation that can be used in an urban area, and may refer to a means of transportation that includes movement between the urban area and a regional hub.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 4, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGs. 3 and 4 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 5 shows an example of a sensing operation, based on an embodiment of the present disclosure. The embodiment of FIG. 5 may be combined with various embodiments of the present disclosure. Specifically, (a) of FIG. 5 shows an example of sensing (e.g., monostatic sensing) with co-located sensing receiver and sensing transmitter, and (b) of FIG. 5 shows an example of sensing (e.g., bistatic sensing) with separated sensing receiver and sensing transmitter.

Layers of a radio interface protocol between the UE and the network may be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC _CONNECTED state, and, otherwise, the UE may be in an RRC_IDLE state. In case of the NR, an RRC _INACTIVE state is additionally defined, and a UE being in the RRC _INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| | 15kHz (u=0) | 14 | 10 | 1 |
| normal CP | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

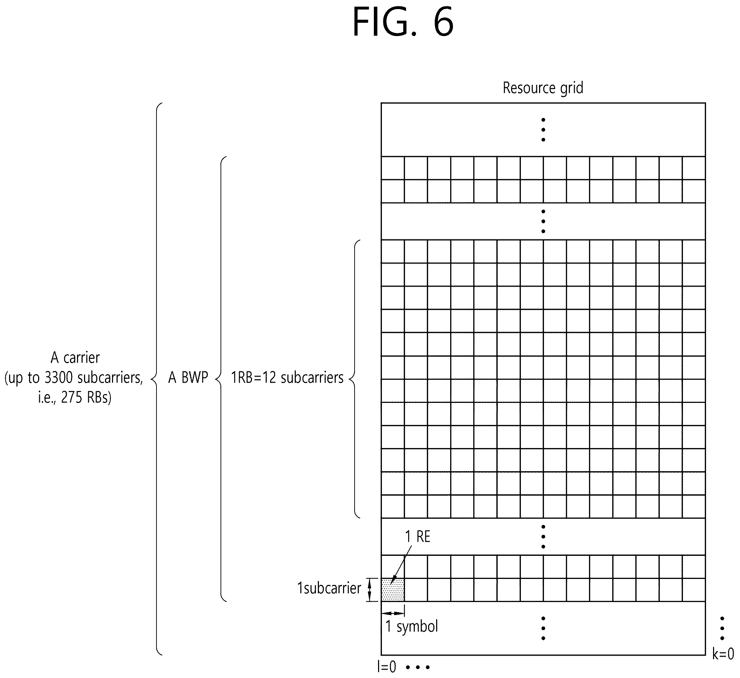

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A bandwidth part (BWP) may be a set of consecutive physical resource blocks (PRBs) in a given numerology. The PRB may be selected from consecutive sub-sets of common resource blocks (CRBs) for the given numerology on a given carrier

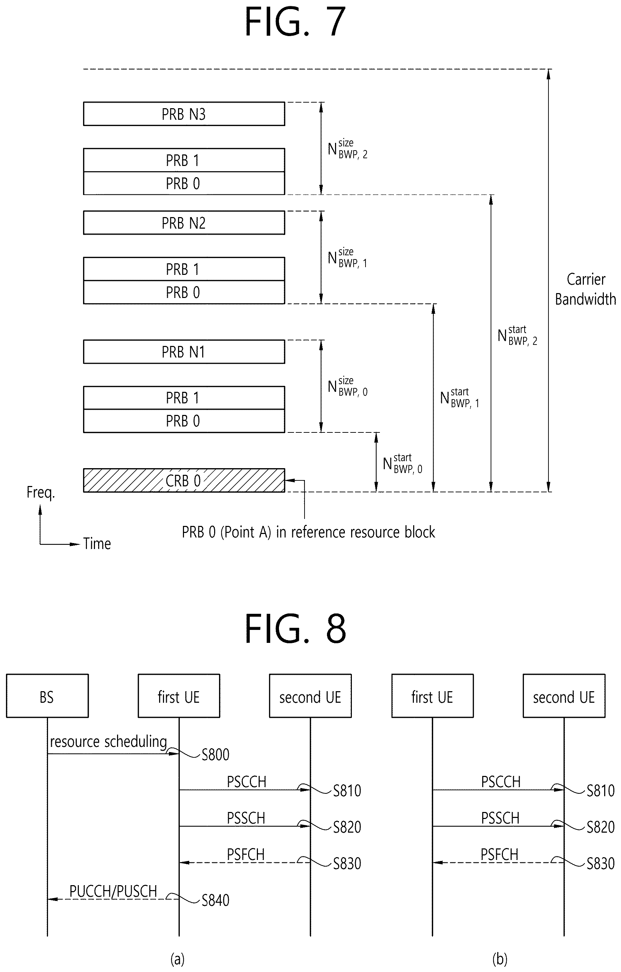

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, a PSCCH may be replaced with a control channel, a physical control channel, a control channel related to sidelink, a physical control channel related to sidelink, etc. In the present disclosure, a PSSCH may be replaced with a shared channel, a physical shared channel, a shared channel related to sidelink, a physical shared channel related to sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in a resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 8, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Meanwhile, in the conventional unlicensed spectrum (NR-U), a communication method between a UE and a base station is supported in an unlicensed band. In addition, a mechanism for supporting communication in an unlicensed band between sidelink UEs is planned to be supported in Rel-18.

Meanwhile, a set of (equally spaced) non-contiguous RBs on a frequency may be allocated to a UE. This set of non-contiguous RBs may be referred to as interlaced RBs. This may be useful in spectrum (e.g., shared spectrum) that is subject to regulations such as occupied channel bandwidth (OCB), power spectral density (PSD), etc.

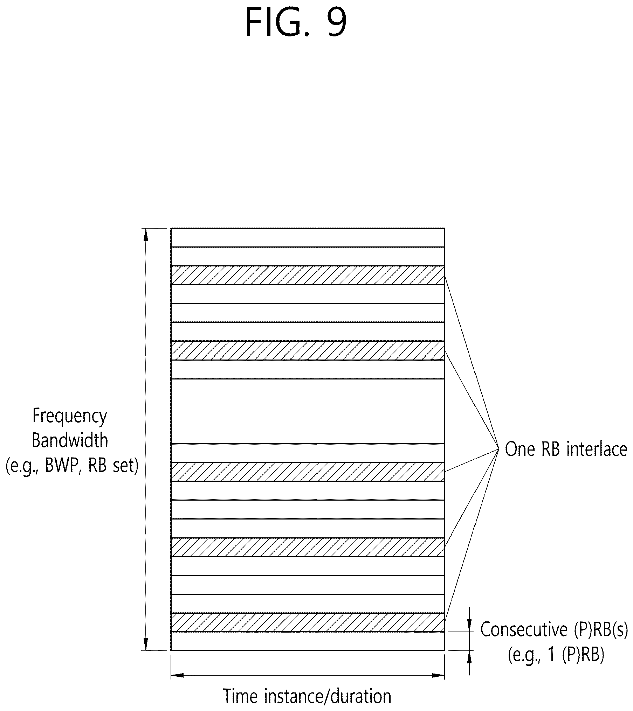

FIG. 9 shows an interlaced RB, based on an embodiment of the present disclosure. The embodiment of FIG. 9 may be combined with various embodiments of the present disclosure.

Referring to FIG. 9, interlaces of RBs may be defined in a frequency domain. An interlace m∈{0,1, ..., M-1} may comprise (common) RBs {m, M+m, 2M+m, 3M+m, ...}, where M may represent the number of interlaced RBs given by Table 3.

**[Table 3]**

| u | M |
|---|---|
| 0 | 10 |
| 1 | 5 |

A communication device (e.g., a device, a UE, a vehicle, a drone, etc. proposed in various embodiments of the present disclosure) may transmit a signal/channel by using one or more interlaced RBs.

In the present disclosure, a channel may refer to a set of frequency domain resources in which Listen-Before-Talk (LBT) is performed. In NR-U, the channel may refer to an LBT bandwidth with 20 MHz and may have the same meaning as an RB set. For example, the RB set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

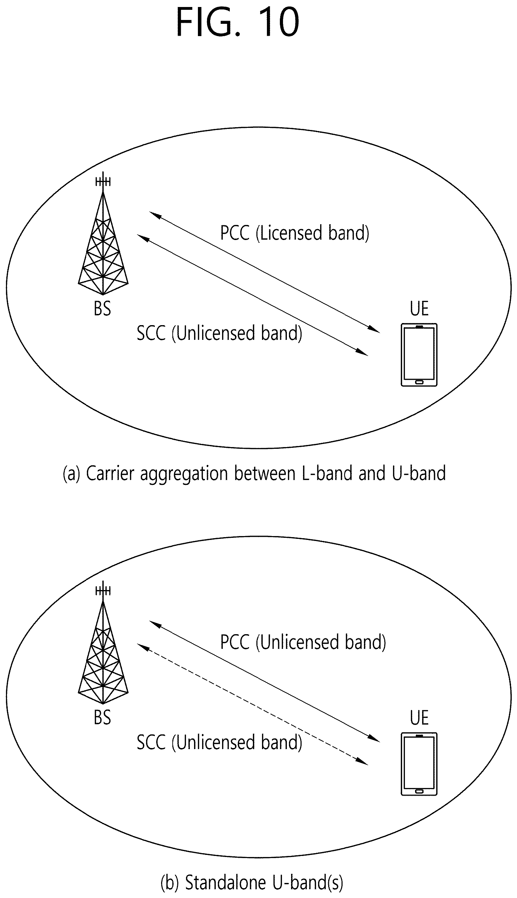

FIG. 10 shows an example of a wireless communication system supporting an unlicensed band, based on an embodiment of the present disclosure. For example, FIG. 10 may include an unlicensed spectrum (NR-U) wireless communication system. The embodiment of FIG. 10 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 10, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 10. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 10, the base station may be replaced with the UE. In this case, for example, PSCCH transmission, PSSCH transmission, PSFCH transmission, S-SSB transmission, etc. may be supported on a UCell.

Unless otherwise noted, the definitions below are applicable to the following terminologies used in the present disclosure.
- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of Tₛₗ = 9 us. The base station or the UE senses a channel during a sensing slot duration. If power detected for at least 4 us within the sensing slot duration is less than an energy detection threshold Xₜₕᵣₑₛₕ, the sensing slot duration Tₛₗ is considered to be idle. Otherwise, the sensing slot duration Tₛₗ = 9 us is considered to be busy. CAP may also be referred to as listen before talk (LBT).
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

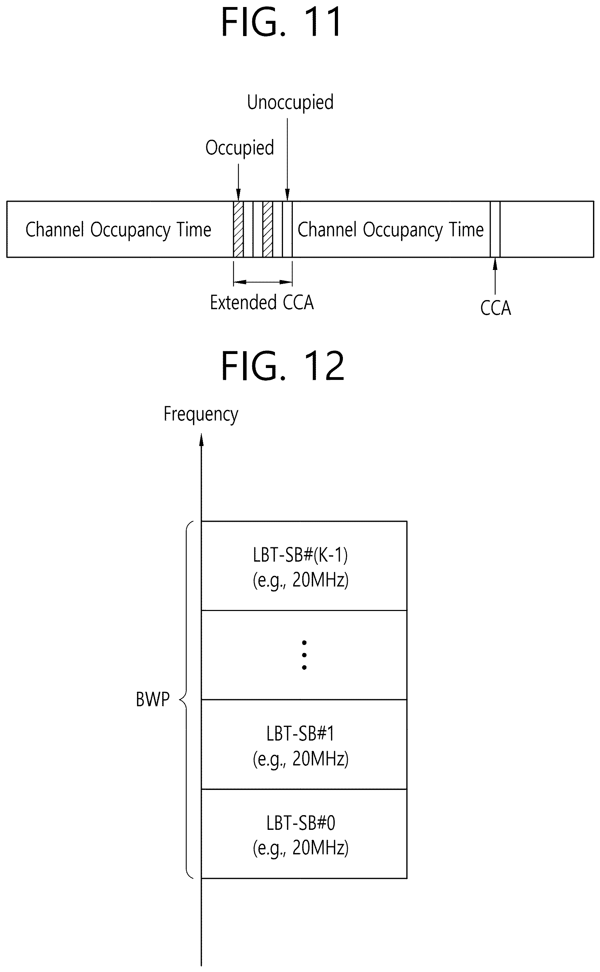

FIG. 11 shows a method of occupying resources in an unlicensed band, based on an embodiment of the present disclosure. The embodiment of FIG. 11 may be combined with various embodiments of the present disclosure.

Referring to FIG. 11, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is said that clear channel assessment (CCA) is confirmed. If a CCA threshold (e.g., X_{Thresh}) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT.

Table 4 shows an example of the channel access procedure (CAP) supported in NR-U.

**[Table 4]**

| | Type | Explanation |
|---|---|---|
| DL | Type 1 CAP | CAP with random back-off |
| | | - time duration spanned by the sensing slots that are sensed to be idle before a downlink transmission(s) is random |
| | Type 2 CAP | CAP without random back-off |
| | - Type 2A, 2B, 2C | - time duration spanned by sensing slots that are sensed to be idle before a downlink transmission(s) is deterministic |
| UL or SL | Type 1 CAP | CAP with random back-off |
| | | - time duration spanned by the sensing slots that are sensed to be idle before an uplink or sidelink transmission(s) is random |
| | Type 2 CAP | CAP without random back-off |
| | - Type 2A, 2B, 2C | - time duration spanned by sensing slots that are sensed to be idle before an uplink or sidelink transmission(s) is deterministic |

Referring to Table 4, the LBT type or CAP for DL/UL/SL transmission may be defined. However, Table 4 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 12 shows a case in which a plurality of LBT-SBs are included in an unlicensed band, based on an embodiment of the present disclosure. The embodiment of FIG. 12 may be combined with various embodiments of the present disclosure.

Referring to FIG. 12, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 5 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 5]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

### (1) Type 1 downlink (DL) CAP Method

In the type 1 DL CAP, the length of a time duration spanned by sensing slots sensed to be idle before transmission(s) may be random. The type 1 DL CAP may be applied to the following transmissions:
- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

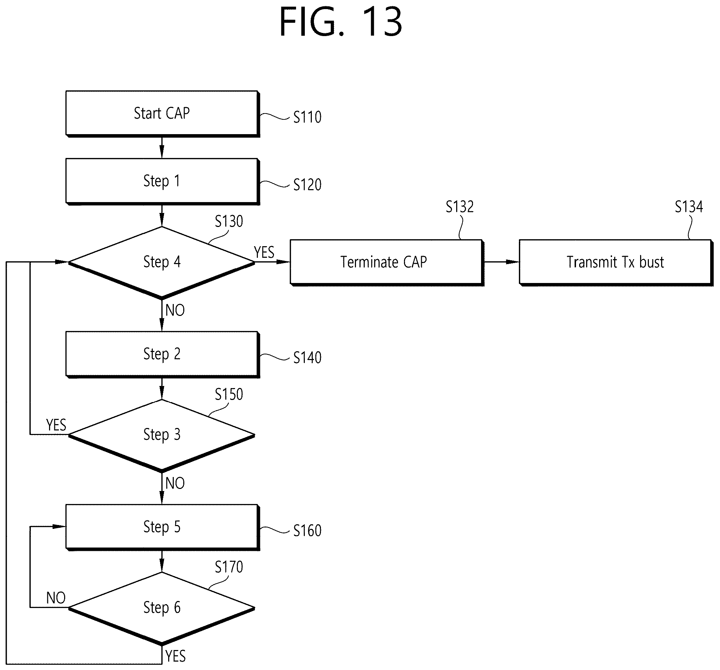

FIG. 13 shows CAP operations performed by a base station to transmit a downlink signal through an unlicensed band, based on an embodiment of the present disclosure. The embodiment of FIG. 13 may be combined with various embodiments of the present disclosure.

Referring to FIG. 13, the base station may sense whether a channel is idle for sensing slot durations of a defer duration T_{d}. Then, if a counter N is zero, the base station may perform transmission (S 134). In this case, the base station may adjust the counter N by sensing the channel for additional sensing slot duration(s) according to the following steps:
Step 1) (S120) The base station sets N to Nᵢₙᵢₜ (N= Nᵢₙᵢₜ), where Nᵢₙᵢₜ is a random number uniformly distributed between 0 and CWₚ. Then, step 4 proceeds.
Step 2) (S140) If N>0 and the base station determines to decrease the counter, the base station sets N to N-1 (N=N-1).
Step 3) (S150) The base station senses the channel for the additional sensing slot duration. If the additional sensing slot duration is idle (Y), step 4 proceeds. Otherwise (N), step 5 proceeds.
Step 4) (S130) If N=0 (Y), the base station terminates the CAP (S132). Otherwise (N), step 2 proceeds.
Step 5) (S160) The base station senses the channel until either a busy sensing slot is detected within an additional defer duration T_{d} or all the slots of the additional defer duration T_{d} are detected to be idle.
Step 6) (S170) If the channel is sensed to be idle for all the slot durations of the additional defer duration T_{d} (Y), step 4 proceeds. Otherwise (N), step 5 proceeds.

Table 6 shows that mₚ, a minimum contention window (CW), a maximum CW, a maximum channel occupancy time (MCOT), and an allowed CW size, which are applied to the CAP, vary depending on channel access priority classes.

**[Table 6]**

| Channel Access Priority Class (p) | mₚ | CW_{min,p} | CW_{max,p} | T_{mcot,p} | allowed CWₚ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 6, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration T_{d} is configured in the following order: duration Tr (16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on HARQ-ACK feedback (e.g., the ratio of ACK or NACK) for a previous DL burst (e.g., PDSCH) (CW size update). For example, CWₚ may be initialized to CW_{min,p} based on the HARQ-ACK feedback for the previous DL burst. Alternatively, CWₚ may be increased to the next higher allowed value or maintained as it is.

### (2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration T_{short_dl} = 25 us. Herein, T_{short_dl} includes the duration T_{f}(=16 us) and one sensing slot duration immediately after the duration T_{f}, where the duration Tr includes a sensing slot at the beginning thereof.
- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for T_{f} = 16 us. T_{f} includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

### (1) Type 1 uplink (UL) CAP Method

In the type 1 UL CAP, the length of a time duration spanned by sensing slots sensed to be idle before transmission(s) is random. The type 1 UL CAP may be applied to the following transmissions.
- PUSCH/SRS transmission(s) scheduled and/or configured by the base station
- PUCCH transmission(s) scheduled and/or configured by the base station
- Transmission(s) related to a random access procedure (RAP)

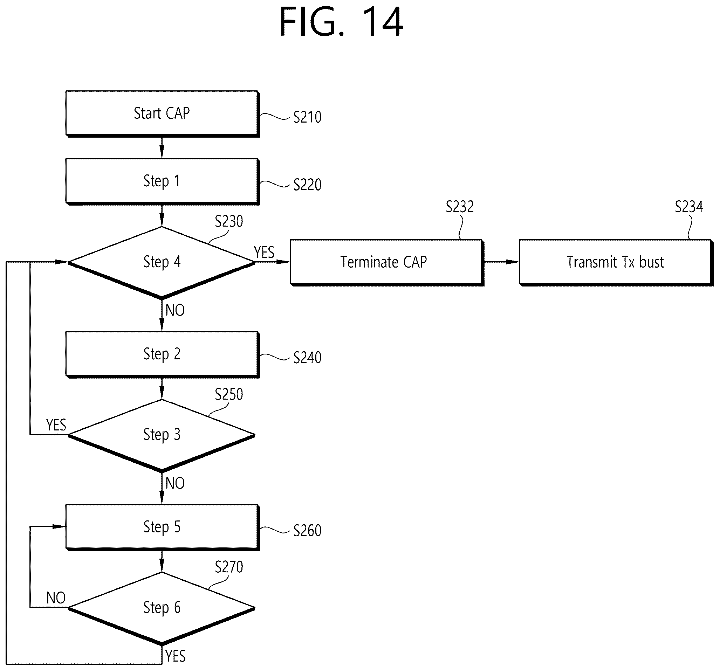

FIG. 14 shows type 1 CAP operations performed by a UE to transmit an uplink signal, based on an embodiment of the present disclosure. The embodiment of FIG. 14 may be combined with various embodiments of the present disclosure.

Referring to FIG. 14, the UE may sense whether a channel is idle for sensing slot durations of a defer duration T_{d}. Then, if a counter N is zero, the UE may perform transmission (S234). In this case, the UE may adjust the counter N by sensing the channel for additional sensing slot duration(s) according to the following steps:
Step 1) (S220) The UE sets N to Nᵢₙᵢₜ (N = Nᵢₙᵢₜ), where Nᵢₙᵢₜ is a random number uniformly distributed between 0 and CWₚ. Then, step 4 proceeds.
Step 2) (S240) If N>0 and the UE determines to decrease the counter, the UE sets N to N-1 (N = N-1).
Step 3) (S250) The UE senses the channel for the additional sensing slot duration. If the additional sensing slot duration is idle (Y), step 4 proceeds. Otherwise (N), step 5 proceeds.
Step 4) (S230) If N=0 (Y), the UE terminates the CAP (S232). Otherwise (N), step 2 proceeds.
Step 5) (S260) The UE senses the channel until either a busy sensing slot is detected within an additional defer duration T_{d} or all the slots of the additional defer duration T_{d} are detected to be idle.
Step 6) (S270) If the channel is sensed to be idle for all the slot durations of the additional defer duration T_{d} (Y), step 4 proceeds. Otherwise (N), step 5 proceeds.

Table 7 shows that mₚ, a minimum CW, a maximum CW, a maximum channel occupancy time (MCOT), and an allowed CW size, which are applied to the CAP, vary depending on channel access priority classes.

**[Table 7]**

| Channel Access Priority Class (p) | mₚ | CW_{min,p} | CW_{max,p} | T_{ulmcot,p} | allowed CWₚ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 7, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration T_{d} is configured in the following order: duration Tr (16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on an explicit/implicit reception response for a previous UL burst (e.g., PUSCH) (CW size update). For example, CWₚ may be initialized to CW_{min,p} based on the explicit/implicit reception response for the previous UL burst. Alternatively, CWₚ may be increased to the next higher allowed value or maintained as it is.

### (2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration T_{short_dl} = 25 us. Herein, T_{short_dl} includes the duration T_{f} (=16 us) and one sensing slot duration immediately after the duration T_{f.} In the type 2A UL CAP, Tr includes a sensing slot at the beginning thereof. In the type 2B UL CAP, the UE may perform transmission immediately after the channel is sensed to be idle for the sensing duration T_{f} = 16 us. In the type 2B UL CAP, Tr includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, mₚ, etc.). For example, after selecting a random value between the minimum CW and the maximum CW mapped to the CAPC, the UE may select a backoff counter (BC) between zero and the random value. In this case, for example, the BC may be a positive integer less than or equal to the random value. The UE sensing a channel decreases the BC by 1 if the channel is idle. If the BC becomes zero and the UE detects that the channel is idle for the time T_{d} (T_{d} = T_{f} + mₚ * Tₛₗ), the UE may attempt to transmit data by occupying the channel. If the UE attempting to transmit data detects a collision, the UE may increase the CW size mapped to the CAPC, and the UE may reselect a BC between zero and the increased CW. The UE that successfully transmits a packet may initialize the CW size (to the CW min).

For example, Tₛₗ (= 9 usec) is a basic sensing unit or sensing slots, and may include a measurement duration for at least 4 usec. For example, the front 9 usec of T_{f} (= 16 usec) may be configured to be Tₛₗ. For example, mₚ may be a constant mapped per CAPC and used in T_{d} calculation. For example, a smaller value may be mapped to a lower CACP value (higher priority).

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 20 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

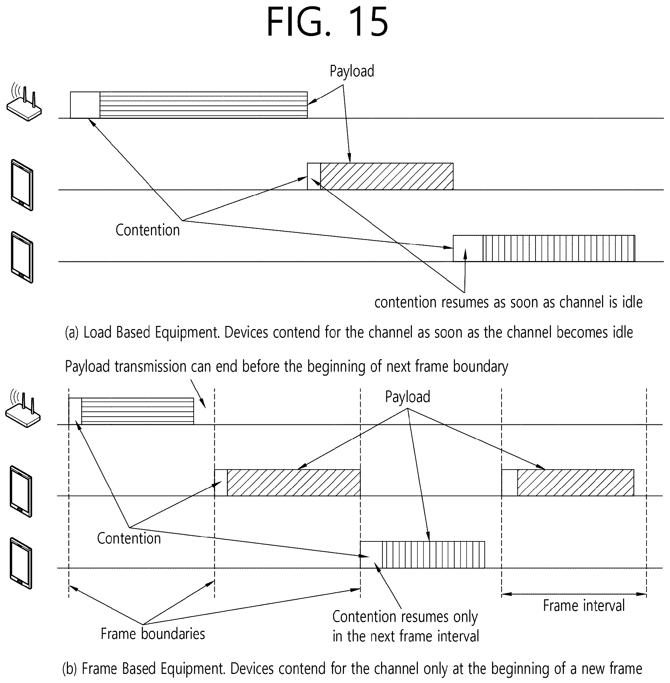

FIG. 15 shows a channel access procedure, based on an embodiment of the present disclosure. Specifically, (a) of FIG. 15 shows an example of a dynamic channel access procedure (load based equipment, LBE), and (b) of FIG. 15 shows an example of a semi-static channel access procedure (frame based equipment, FBE). The embodiment of FIG. 15 may be combined with various embodiments of the present disclosure.

Referring to (a) of FIG. 15, if a channel is idle, the UE may perform contention with other UEs on an unlicensed band to immediately occupy the channel. In addition, if the UE occupies the channel, the UE may transmit data.

Referring to (b) of FIG. 15, the UE may perform contention with other UEs on an unlicensed band at the last time within a synchronized frame boundary (or a fixed frame period (FFP)) (e.g., certain time before the start of the next FFP (or starting time)). In addition, if the UE occupies a channel within a fixed frame period (FFP), the UE may transmit data. The data transmission should complete before the next FFP begins. The UE may perform type 2 series LBT operation within the FFP. For example, within the FFP, the UE may not perform random backoff-based LBT, and the UE may sense a channel for a short period of time and perform data transmission if the channel is idle.

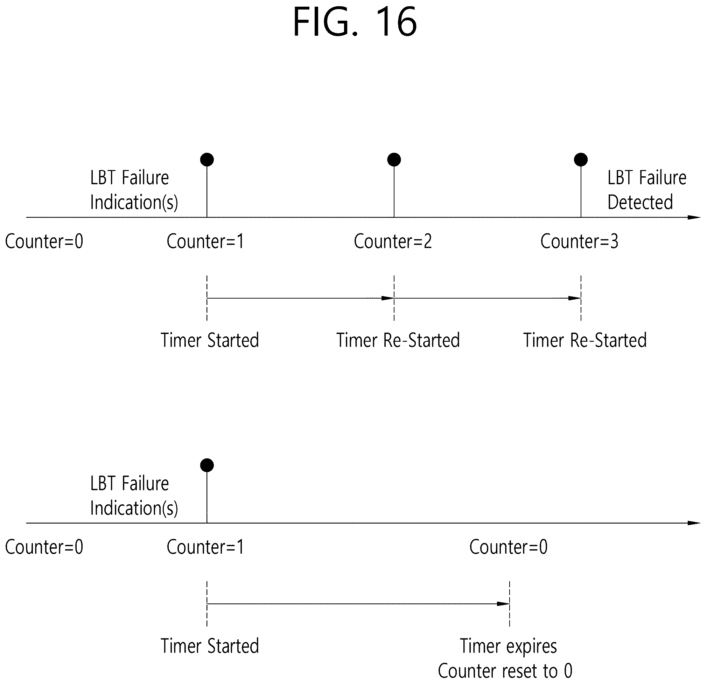

FIG. 16 shows a procedure related to LBT detection, based on an embodiment of the present disclosure. The embodiment of FIG. 16 may be combined with various embodiments of the present disclosure.

Referring to FIG. 16, for example, the lower layer may perform an (SL) LBT procedure. For example, the lower layer may perform an (SL) LBT procedure, see TS 37.213. For example, the lower layer may perform an (SL) LBT procedure, according to which a transmission is not performed by lower layers if the channel is identified as being occupied. For example, when lower layer performs an (SL) LBT procedure before a transmission and the transmission is not performed, an (SL) LBT failure indication is sent to the MAC entity from lower layers. For example, unless otherwise specified, when (SL) LBT procedure is performed for a transmission, actions as specified in this specification are performed regardless of if an (SL) LBT failure indication is received from lower layers. For example, when (SL) LBT is not performed by the lower layers, (SL) LBT failure indication is not received from lower layers.

For example, (sidelink) LBT failure detection and recovery procedure may be performed as follows.

For example, the MAC entity may be configured by RRC with a (SL) consistent LBT failure detection and recovery procedure. (SL) consistent LBT failure may be detected per RB set by counting (SL) LBT failure indications, for all (SL) transmissions, from the lower layers to the MAC entity.

For example, RRC may configure the following parameters in the (SL) LBT failure recovery configure (e.g., (sl-)lbt-FailureRecoveryConfig):
- (SL) LBT failure instance maximum count for the (SL) consistent LBT failure detection (e.g., (sl-)lbt-FailureInstanceMaxCount)
- (SL) LBT failure instance detection timer for the (SL) consistent LBT failure detection (e.g., (sl-)lbt-FailureDetectionTimer)
- (SL) LBT recovery timer for recovery of the triggered (SL) consistent LBT failure (e.g., (sl-)LBT-RecoveryTimer)

The following UE variable is used for the SL consistent LBT failure detection procedure:
- SL_LBT_COUNTER (per RB set): counter for SL LBT failure indication which is initially set to 0.

For example, for (activated) (SL) BWP (e.g., configured with (sl-)lbt-FailureRecoveryConfig), the MAC entity may increment LBT_COUNTER (e.g., SL_LBT_COUNTER) for the RB set by 1. For example, for (activated) (SL) BWP (e.g., configured with (sl-)lbt-FailureRecoveryConfig), the MAC entity may, if (SL) LBT failure indication has been received from lower layers for an RB set of the configured pool(s) of resources in the (SL) BWP, increment LBT_COUNTER (e.g., SL_LBT_COUNTER) for the RB set by 1. For example, as shown in FIG. 16, for (activated) (SL) BWP (e.g., configured with (sl-)lbt-FailureRecoveryConfig), the MAC entity may, if (SL) LBT failure indication has been received from lower layers for an RB set of the configured pool(s) of resources in the (SL) BWP, increment LBT_COUNTER (e.g., SL_LBT_COUNTER) for the RB set by 1.

For example, for (activated) (SL) BWP (e.g., configured with (sl-)lbt-FailureRecoveryConfig), the MAC entity may start or restart the (sl-)lbt-FailureDetectionTimer for the RB set. For example, for (activated) (SL) BWP (e.g., configured with (sl-)lbt-FailureRecoveryConfig), the MAC entity may, if (SL) LBT failure indication has been received from lower layers for an RB set of the configured pool(s) of resources in the (SL) BWP, start or restart the (sl-)lbt-FailureDetectionTimer for the RB set. For example, as shown in FIG. 16, for (activated) (SL) BWP (e.g., configured with (sl-)lbt-FailureRecoveryConfig), the MAC entity may, if (SL) LBT failure indication has been received from lower layers for an RB set of the configured pool(s) of resources in the (SL) BWP, start or restart the (sl-)lbt-FailureDetectionTimer for the RB set.

For example, for (activated) (SL) BWP (e.g., configured with (sl-)lbt-FailureRecoveryConfig), the MAC entity may trigger (SL) consistent LBT failure for the RB set in the (SL) BWP. For example, for (activated) (SL) BWP (e.g., configured with (sl-)lbt-FailureRecoveryConfig), the MAC entity may, if LBT_COUNTER (e.g., SL_LBT_COUNTER) >= (sl-)lbt-FailureInstanceMaxCount, trigger (SL) consistent LBT failure for the RB set in the (SL) BWP. For example, as shown in FIG. 16, for (activated) (SL) BWP (e.g., configured with (sl-)lbt-FailureRecoveryConfig), the MAC entity may, if LBT_COUNTER (e.g., SL_LBT_COUNTER) >= (sl-)lbt-FailureInstanceMaxCount, trigger (SL) consistent LBT failure for the RB set in the (SL) BWP.

For example, for (activated) (SL) BWP (e.g., configured with (sl-)lbt-FailureRecoveryConfig), the MAC entity may indicate (SL) consistent LBT failure based (sidelink) RLF detection for all destination IDs associated to unicast service to upper layers (e.g., RRC). For example, for (activated) (SL) BWP (e.g., configured with (sl-)lbt-FailureRecoveryConfig), the MAC entity may, if consistent LBT failure has been triggered in all the RB sets of the configured pool(s) of resources in the (SL) BWP, indicate (SL) consistent LBT failure based (sidelink) RLF detection for all destination IDs associated to unicast service to upper layers (e.g., RRC). For example, as shown in FIG. 16, for (activated) (SL) BWP (e.g., configured with (sl-)lbt-FailureRecoveryConfig), the MAC entity may, if consistent LBT failure has been triggered in all the RB sets of the configured pool(s) of resources in the (SL) BWP, indicate (SL) consistent LBT failure based (sidelink) RLF detection for all destination IDs associated to unicast service to upper layers (e.g., RRC).

For example, for (activated) (SL) BWP (e.g., configured with (sl-)lbt-FailureRecoveryConfig), the MAC entity may start or restart the (sl-)lbt-FailureDetectionTimer for the RB set. For example, for (activated) (SL) BWP (e.g., configured with (sl-)lbt-FailureRecoveryConfig), the MAC entity may, if (SL) LBT failure indication has been received from lower layers for an RB set of the configured pool(s) of resources in the (SL) BWP, start or restart the (sl-)lbt-FailureDetectionTimer for the RB set. For example, as shown in FIG. 16, for (activated) (SL) BWP (e.g., configured with (sl-)lbt-FailureRecoveryConfig), the MAC entity may, if (SL) LBT failure indication has been received from lower layers for an RB set of the configured pool(s) of resources in the (SL) BWP, start or restart the (sl-)lbt-FailureDetectionTimer for the RB set.

For example, for (activated) (SL) BWP (e.g., configured with (sl-)lbt-FailureRecoveryConfig), the MAC entity may set LBT_COUNTER (e.g., SL_LBT_COUNTER) to 0 for the RB set. For example, for (activated) (SL) BWP (e.g., configured with (sl-)lbt-FailureRecoveryConfig), the MAC entity may, if all triggered (SL) consistent LBT failures are cancelled in an RB set, set LBT_COUNTER (e.g., SL_LBT_COUNTER) to 0 for the RB set. For example, for (activated) (SL) BWP (e.g., configured with (sl-)lbt-FailureRecoveryConfig), the MAC entity may, if the (sl-)lbt-FailureDetectionTimer expires for a RB set, set LBT_COUNTER (e.g., SL_LBT_COUNTER) to 0 for the RB set. For example, as shown in FIG. 16, for (activated) (SL) BWP (e.g., configured with (sl-)lbt-FailureRecoveryConfig), the MAC entity may, if all triggered (SL) consistent LBT failures are cancelled in an RB set, set LBT_COUNTER (e.g., SL_LBT_COUNTER) to 0 for the RB set. For example, as shown in FIG. 16, for (activated) (SL) BWP (e.g., configured with (sl-)lbt-FailureRecoveryConfig), the MAC entity may, if the (sl-)lbt-FailureDetectionTimer expires for a RB set, set LBT_COUNTER (e.g., SL_LBT_COUNTER) to 0 for the RB set.

For example, for (activated) (SL) BWP (e.g., configured with (sl-)lbt-FailureRecoveryConfig), the MAC entity may set LBT_COUNTER (e.g., SL_LBT_COUNTER) to 0 for all the RB sets. For example, for (activated) (SL) BWP (e.g., configured with (sl-)lbt-FailureRecoveryConfig), the MAC entity may, if (sl-)lbt-FailureDetectionTimer is reconfigured by upper layers, set LBT_COUNTER (e.g., SL_LBT_COUNTER) to 0 for all the RB sets. For example, for (activated) (SL) BWP (e.g., configured with (sl-)lbt-FailureRecoveryConfig), the MAC entity may, if (sl-)lbt-FailureInstanceMaxCount is reconfigured by upper layers, set LBT_COUNTER (e.g., SL_LBT_COUNTER) to 0 for all the RB sets. For example, as shown in FIG. 16, for (activated) (SL) BWP (e.g., configured with (sl-)lbt-FailureRecoveryConfig), the MAC entity may, if (sl-)lbt-FailureDetectionTimer is reconfigured by upper layers, set LBT_COUNTER (e.g., SL_LBT_COUNTER) to 0 for all the RB sets. For example, as shown in FIG. 16, for (activated) (SL) BWP (e.g., configured with (sl-)lbt-FailureRecoveryConfig), the MAC entity may, if (sl-)lbt-FailureInstanceMaxCount is reconfigured by upper layers, set LBT_COUNTER (e.g., SL_LBT_COUNTER) to 0 for all the RB sets.

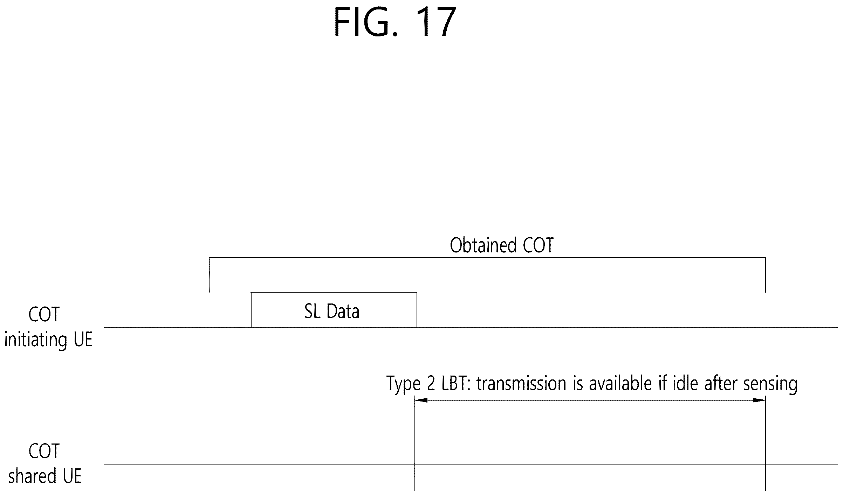

FIG. 17 shows an embodiment related to a transmission operation of a UE within a shared COT, based on an embodiment of the present disclosure. FIG. 17 may be combined with various embodiments of the present disclosure.

Referring to FIG. 17, For example, a UE (e.g., a COT initiating UE of FIG. 17) that creates a COT (e.g., may be a shared COT) may share a COT that it has secured with a peer UE (e.g., a responding UE). For example, a UE (e.g., a COT initiating UE) that creates/secures a COT (e.g., may be a shared COT) may transmit a secured (e.g., shared) COT to a peer UE (e.g., a responding UE) through an SCI or a MAC CE or a PC5-RRC message. For example, when transmitting a secured (e.g., shared) COT through an SCI, the UE may transmit the secured (e.g., shared) COT to a UE (e.g., a responding UE) that is a destination (e.g., a pair of L1 Source ID and L1 Destination ID) for a unicast link, and may transmit the secured (e.g., shared) COT to a destination UE for groupcast/broadcast (e.g., a groupcast/broadcast L1 Destination ID) (e.g., a responding UE). For example, when a UE (e.g., a COT initiating UE) transmits a secured (e.g., shared) COT through a MAC CE (e.g., an (SL) COT Information MAC CE), the UE may transmit the secured (e.g., shared) COT to a UE (e.g., a responding UE) that is a destination (e.g., a pair of L1/L2 Source IDs and L1/L2 Destination IDs) for a unicast link, and may transmit the secured (e.g., shared) COT to a destination UE for groupcast/broadcast (e.g., a groupcast/broadcast L1/L2 Destination ID) (e.g., a responding UE). For example, a UE (e.g., a COT responding UE (e.g., a responding UE)) that has received a (e.g., shared) COT from a UE (e.g., a COT initiating UE) that has created the (e.g., shared) COT may, within the shared COT, after a transmission of the UE (e.g., a COT initiating UE) that has created the (e.g., shared) COT is completed, perform a type 2 LBT (e.g., a type 2A or type 2B LBT: when a sensing operation is performed and it is confirmed that a channel is idle for a certain period of time, (SL) data to be transmitted within the shared COT may be transmitted; e.g., a type 2C LBT: (SL) data may be transmitted immediately without sensing (for a certain period of time)). For example, shared COT information that a COT creating UE (e.g., a COT initiating UE) transmits to a COT responding UE (e.g., a responding UE) may include a shared COT duration, a shared COT start offset, and information related to an SL-CAPC value to be used by the COT responding UE (e.g., a responding UE). As shown in FIG. 17, a COT initiating UE may create and share a COT, and a COT responding UE (e.g., a responding UE) that receives the COT may receive the COT and may transmit (SL) data by performing a short LBT (e.g., a type 2-series LBT: a non-random backoff based LBT that performs sensing only for a short period of time and, when the channel is idle, immediately performs (SL) data transmission) within the COT.

For example, a UE may not perform an operation of transmitting a shared COT to a COT responding UE (e.g., a responding UE), but may create a COT by itself in an unlicensed band for sidelink data transmission and may transmit sidelink data by performing a type 2 LBT within a COT duration that it has created. For example, when a receiving UE (e.g., a responding UE) is a UE that performs an (SL) DRX operation, a transmitting UE (e.g., a COT initiating UE) may, when it directly creates and secures a COT (e.g., a duration in which a type 2-series LBT can be performed), consider only a duration that belongs to an (SL) DRX active time (e.g., a duration for monitoring the PSCCH/PSSCH for reception of data of the transmitting UE) of the receiving UE (e.g., a responding UE) as a COT creating duration. For example, because a COT duration that a transmitting UE (e.g., a COT initiating UE) has created and secured belongs to an (SL) DR active time of its receiving UE (e.g., a responding UE), when the transmitting UE transmits sidelink data in a duration in which it has created sidelink data, the receiving UE (e.g., a responding UE) may properly receive sidelink data that the transmitting UE transmits.

For example, when a transmitting UE (e.g., a COT initiating UE) directly creates a COT and uses the COT for performing a type 2 LBT, the transmitting UE may transmit a COT that it has created to a receiving UE (via PC5 RRC message or MAC CE or SCI) so that the receiving UE (e.g., a responding UE) may consider a COT duration that the transmitting UE has transmitted as an (SL) DRX active time and may perform an (SL) DRX active time operation (e.g., an operation of monitoring the PSCCH/PSSCH for reception of data of the transmitting UE). For example, when a transmitting UE (e.g., a UE that supports an (SL) DRX operation when it plays a role of a receiving UE) directly creates a COT and performs an (SL) data transmission based on a type 2 LBT in a COT that it has created, the transmitting UE may consider a COT duration that it has created as an (SL) DRX active time and may perform an (SL) DRX operation.

For example, a COT responding UE (e.g., a UE that supports an (SL) DRX operation when it plays a role of a receiving UE) (e.g., a responding UE) that has received a shared COT from a COT initiating UE may consider a shared COT duration as its (SL) DRX active time and may receive a signal or message that the COT initiating UE transmits during an (SL) DRX active time.

During an active time, an additional device corresponding to an additional ID may receive a signal of the PSCCH and/or the PSSCH. This optimized reception time may guarantee that the additional device corresponding to the additional ID consumes resources and battery power only when it receives an actual data transmission, thereby improving overall energy efficiency and extending device lifetime. By allowing an additional device corresponding to the additional ID to have a specific active time during which the PSCCH and/or the PSSCH can be received, the system may enhance sidelink communication capabilities for Vehicle-to-Everything (V2X) communication, public safety messages, and other direct device-to-device interactions without network infrastructure.

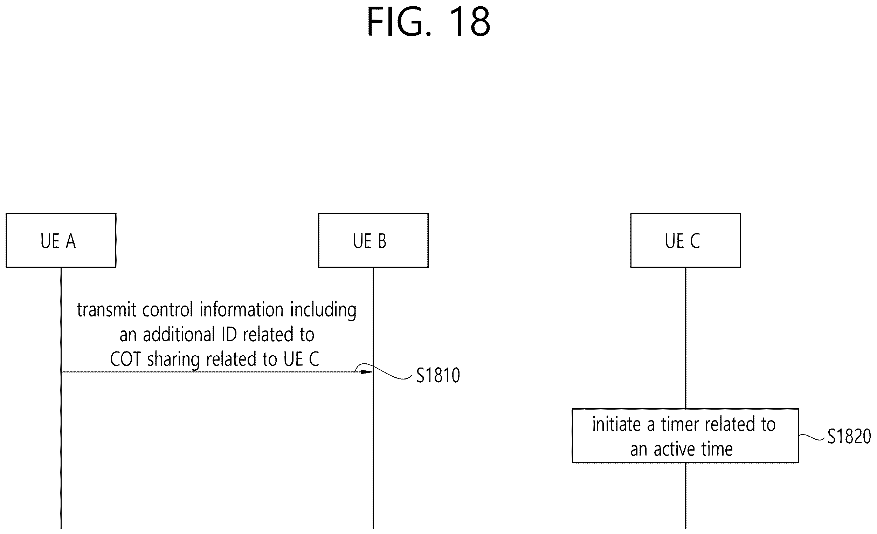

FIG. 18 shows an embodiment related to an initiation of a timer related to an active time, based on an embodiment of the present disclosure. The embodiment of FIG. 18 may be combined with various embodiments of the present disclosure.

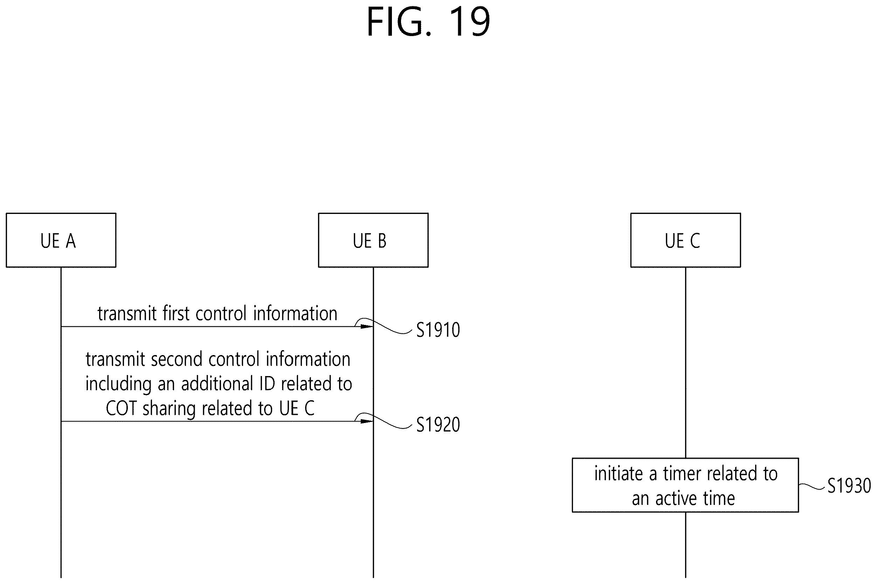

FIG. 19 shows an embodiment related to an initiation of a timer related to an active time, based on an embodiment of the present disclosure. The embodiment of FIG. 19 may be combined with various embodiments of the present disclosure.

Referring to FIG. 18 and/or FIG. 19, COT sharing may be supported. For example, UE to UE COT sharing may be supported (in (NR) (sidelink) operation) for (SL-)U(unlicensed). For example, (when performing PSSCH/PSCCH transmissions,) a responding UE may utilize a COT shared by a COT initiating UE when the responding UE's transmission(s) is intended for the COT initiating UE. For example, in unicast, the destination/source ID of the responding UE's transmission may need to match the source/destination ID of the initiator UE's transmission for the same unicast link. For example, in groupcast/broadcast, destination ID of the responding UE's transmission may need to match the initiator's destination ID. For example, a COT initiating UE may transmit an additional pair of source/destination ID in either unicast, groupcast, or broadcast. For example, in this case (e.g., the COT initiating UE transmits an additional pair of source/destination ID), the responding UE may utilize a COT shared by a COT initiating UE if the destination/source (e.g., for unicast) or destination (e.g., for groupcast/broadcast) of the responding UE transmission match what is carried in the additional ID(s). For example, a UE's transmissions in a shared COT may need to have (SL-)CAPC value that is equal to or smaller than the (SL-)CAPC value indicated in the COT sharing information. For example, in order to satisfy the COT sharing requirements, a responding UE may perform an enhanced LCP procedure (e.g., as specified in 38.321 [6]). For example, when receiving multiple COT sharing indications from different COT initiators, it may be up to UE implementation which shared COT is used.

For example, in step S1810, UE A may transmit control information including an additional ID related to COT sharing related to UE C. For example, the control information may be transmitted on the PSCCH and/or the PSSCH. For example, in step S1910, UE A may transmit first control information to UE B. For example, the first control information may be transmitted on the PSCCH. For example, in step S1920, UE A may transmit second control information including an additional ID related to COT sharing related to UE C to UE B. For example, the second control information may be transmitted on the PSSCH. For example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

For example, SCI carried on PSCCH may be a 1^{st}-stage SCI, which may transport (sidelink) scheduling information. For example, SCI format 1-A may be used for the scheduling of PSSCH and 2^{nd}-stage-SCI on PSSCH.

For example, SCI carried on PSSCH may be a 2^{nd}-stage SCI, which may transport sidelink scheduling information. For example, SCI format 2-A may include source ID. For example, SCI format 2-A may include destination ID. For example, SCI format 2-A may include cast type indicator. For example, if cast type indicator field indicates value '00', cast type may be broadcast. For example, if value of cast type indicator field is '01', cast type may be groupcast when HARQ-ACK information includes ACK or NACK. For example, if value of cast type indicator field is '10', cast type may be unicast. For example, if value of cast type indicator field is '11', cast type may be groupcast when HARQ-ACK information includes ACK or NACK. For example, if value of cast type indicator field is '10', cast type may be groupcast when HARQ-ACK information includes only NACK.

For example, SCI carried on PSSCH may be a 2^{nd}-stage SCI, which may transport sidelink scheduling information. For example, SCI format 2-A may include CAPC. For example, SCI format 2-A may include COT sharing cast type. For example, if value of COT sharing cast type field is '01', cast type may be groupcast when HARQ-ACK information includes ACK or NACK. For example, if value of COT sharing cast type field is '10', cast type may be unicast. For example, if value of COT sharing cast type field is '11', cast type may be groupcast when HARQ-ACK information includes ACK or NACK. For example, if value of COT sharing cast type field is '10', cast type may be groupcast when HARQ-ACK information includes only NACK. For example, SCI format 2-A may include COT sharing additional ID. For example, COT sharing additional ID may include layer 1 destination ID and/or layer 1 source ID. For example, the layer 1 source ID may be reserved bit when the COT sharing cast type field is set to '00' or '01'. For example, SCI format 2-A may include remaining COT duration.

For example, in step S1820, UE C may initiate a timer related to an active time. For example, in step S1930, UE C may initiate a timer related to an active time. For example, a timer related to an active time may be a (sidelink) onduration timer, a (sidelink) inactivity timer, and/or a (sidelink) retransmission timer. For example, when UE C (e.g., responding UE C) is a UE that performs an (sidelink) DRX operation, UE C (e.g., responding UE C) may, when it receives shared COT information from UE A (e.g., COT initiating UE A) and confirms that its own source layer-1 ID is included in an additional ID field, not initiate a (sidelink) DRX inactivity timer and a (sidelink) DRX retransmission timer or a (sidelink) DRX HARQ RTT timer (e.g., or may initiate a (sidelink) DRX inactivity timer and a (sidelink) DRX retransmission timer or a (sidelink) DRX HARQ RTT timer). For example, a timer related to an active time may be a (sidelink) DRX onduration timer, a (sidelink) DRX inactivity timer, and/or a (sidelink) DRX retransmission timer. For example, a (sidelink) DRX onduration timer may be a duration in which a UE that performs a (sidelink) DRX operation basically has to operate in an active time in order to receive the PSCCH/PSSCH of a peer UE. For example, a (sidelink) DRX inactivity timer may be a duration that extends a (sidelink) DRX onduration duration that is a duration in which a UE that performs a (sidelink) DRX operation basically has to operate in an active time in order to receive the PSCCH/PSSCH of a peer UE. For example, a (sidelink) DRX onduration timer may be extended by a (sidelink) DRX inactivity timer duration. For example, when a UE receives a PSCCH (1^{st} SCI and 2^{nd} SCI) for a new TB from a peer UE or receives a new packet (new PSSCH transmission), the UE may initiate a (sidelink) DRX inactivity timer to extend a (sidelink) DRX onduration timer. For example, a (sidelink) DRX retransmission timer may be a duration in which a UE that performs a (sidelink) DRX operation operates in an active time in order to receive a retransmission packet (e.g., a PSSCH assignment) that a peer UE transmits. For example, during a (sidelink) DRX retransmission timer duration, the UE may monitor reception of a retransmission sidelink packet (e.g., or a PSSCH assignment) that a peer UE transmits.

For example, sidelink may support (SL) DRX for unicast, groupcast, and broadcast. For example, on duration, inactivity timer, retransmission timer, and/or cycle may be defined (for SL) to determine the (SL) active time for (SL) DRX. For example, during the (SL) active time, the UE may perform SCI monitoring for data reception (e.g., for example, PSCCH and/or 2^{nd} stage SCI on PSSCH). For example, the UE may skip monitoring of SCI for data reception during (SL) DRX inactive time. For example, the (SL) active time of the RX UE may include the time in which any of its applicable (SL) on-duration timer(s), (SL) inactivity-timer(s) or (SL) HARQ retransmission timer(s) (e.g., for any of unicast, groupcast, or broadcast) are running.

For example, the TX UE may maintain a set of timers corresponding to the (SL) DRX timers in the RX UE(s) for each pair of source/destination L2 ID for unicast or destination L2 ID for groupcast/broadcast. For example, when data is available for transmission to one or more RX UE(s) configured with (SL) DRX, the TX UE may select resources taking into account the active time of the RX UE(s).

For example, the UE may determine from SIB12 whether the gNB supports (SL) DRX or not.

For example, (SL) channel access procedures in a shared channel occupancy may be exist. For example, when a UE may initiate a channel occupancy using the channel access procedures described in clause 4.5.1 or clause 4.5.6.3 on a channel(s) to transmit (SL) transmission(s) including PSCCH/PSSCH(s), the UE may provide a channel occupancy sharing information in (SL) control information that includes at least the Layer 1 source and destination IDs, the corresponding channel access priority class (e.g., CAPC), the remaining channel occupancy duration, and the frequency domain information for the applicable RB set(s) of the channel occupancy. For example, the channel occupancy sharing information may also include additional IDs and associated cast type. For example, the additional IDs may include one pair of Layer 1 source and destination IDs for all cast types, where the source ID may be set to the source ID of the UE initiating channel occupancy for unicast and to the reserved bits for groupcast and broadcast.

For example, for the case when a UE transmits (SL) transmission(s) in a shared channel occupancy initiated by another UE, the channel access priority class (e.g., CAPC) value corresponding to the (SL) transmission(s) may be at most equal to the channel access priority class (e.g., CAPC) value provided by the channel access priority class (e.g., CAPC) in the channel occupancy sharing information.

For example, when a UE initiates a channel occupancy to transmit (SL) transmission(s) within a RB set(s) and provides channel occupancy sharing information with a unicast PSCCH/PSSCH transmission within the RB set(s), another UE may transmit unicast PSCCH/PSSCH transmission(s) sharing the initiated channel occupancy within the RB set(s), if the destination and source IDs in the corresponding (SL) control information match the source and destination IDs, respectively, in the unicast PSCCH/PSSCH transmission carrying the channel occupancy information or if the destination and source IDs in the corresponding (SL) control information match a pair of additional source and destination IDs and associated cast type if provided by the channel occupancy sharing information and the corresponding COT sharing cast type indicates '10' value for unicast cast type. For example, another UE may transmit groupcast or broadcast PSCCH/PSSCH transmissions sharing the initiated channel occupancy within the RB set(s), if the destination ID in the corresponding (SL) control information matches an additional destination ID and associated cast type if provided by the channel occupancy sharing information and the corresponding COT sharing cast type indicates '01' or '00' value for groupcast or broadcast cast type, respectively.

For example, when a UE initiates a channel occupancy to transmit (SL) transmission(s) within a RB set(s) and provides channel occupancy sharing information with a groupcast or broadcast PSCCH/PSSCH transmission within the RB set(s), another UE may transmit a groupcast or broadcast PSCCH/PSSCH transmission(s) sharing the initiated channel occupancy within the RB set(s), if the destination ID in the corresponding (SL) control information matches the destination ID in the groupcast or broadcast PSCCH/PSSCH transmission carrying the channel occupancy sharing information or matches an additional destination ID and associated cast type if provided by the channel occupancy sharing information and the corresponding COT sharing cast type indicates '01' or '00' value for groupcast or broadcast cast type, respectively. For example, another UE may transmit unicast PSCCH/PSSCH transmissions sharing the initiated channel occupancy within the RB set(s), if the destination and source IDs in the corresponding (SL) control information match a pair of additional source and destination IDs and associated cast type if provided by the channel occupancy sharing information and the corresponding COT sharing cast type indicates '10' value for unicast cast type.

For example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

For example, UE A (e.g., COT initiating UE A) may, when sharing a COT (e.g., a shared COT) with UE B (e.g., COT responding UE B) (e.g., responding UE B), include, in the shared COT, an ID (e.g., an additional ID) (e.g., an additional ID: a source layer-1 ID or a source layer-2 ID of another UE (e.g., UE C (e.g., responding UE C)) (e.g., another UE other than UE B (e.g., COT responding UE B): e.g., a UE that has a unicast configuration with UE A (e.g., COT initiating UE A) or a UE that has the same groupcast service or broadcast service as UE A (e.g., COT initiating UE A))) and may transmit the ID. For example, a shared COT may be transmitted through a 2^{nd} SCI or a MAC CE or a PC5 RRC message. For example, when UE A (e.g., COT initiating UE A) transmits a shared COT to UE B (e.g., COT responding UE B) through a 2^{nd} SCI (e.g., PSSCH), UE A (e.g., COT initiating UE A) may also transmit (sidelink) data (e.g., data-related PSSCH) to UE B (e.g., COT responding UE B). For example, when UE A (e.g., COT initiating UE A) includes, in a shared COT that it transmits to UE B (e.g., responding UE B), an additional ID (e.g., UE C (e.g., responding UE C)), UE C (e.g., responding UE C) corresponding to the additional ID may not be transmitted (sidelink) data (e.g., data-related PSSCH) (e.g., UE A (e.g., COT initiating UE A) may transmit only a shared COT including an additional ID to UE C (e.g., responding UE C) through a PSSCH (e.g., 2^{nd} SCI)).

For example, UE C (e.g., responding UE C) may, when it receives a shared COT (e.g., data) that UE A (e.g., COT initiating UE A) transmits and confirms that its own source layer-1 ID is included in the shared COT, perform the following operation (e.g., when shared COT information is transmitted through a MAC CE or a PC5 RRC message, UE C (e.g., responding UE C) may check a Layer-2 ID and determine whether the shared COT information received is shared COT information that it should receive). For example, when UE C (e.g., responding UE C) is a UE that performs a (sidelink) DRX operation, UE C (e.g., responding UE C) may, when it receives shared COT information from UE A (e.g., COT initiating UE A) and confirms that its own source layer-1 ID is included in an additional ID field, initiate a (sidelink) DRX inactivity timer and a (sidelink) DRX retransmission timer or a (sidelink) DRX HARQ RTT timer. For example, when UE C (e.g., responding UE C) is a UE that performs a (sidelink) DRX operation, UE C (e.g., responding UE C) may, when it receives shared COT information from UE A (e.g., COT initiating UE A) and confirms that its own source layer-1 ID is included in an additional ID field, not initiate a (sidelink) DRX inactivity timer and a (sidelink) DRX retransmission timer or a (sidelink) DRX HARQ RTT timer (e.g., because UE C (e.g., responding UE C) knows that UE A (e.g., COT initiating UE A) will not transmit (sidelink) data to it in a shared COT duration, UE C (e.g., responding UE C) may have no need to extend its active time by initiating a (sidelink) DRX inactivity timer and a (sidelink) DRX retransmission timer). For example, when UE C (e.g., responding UE C) is a UE that performs a (sidelink) DRX operation, whether UE C (e.g., responding UE C) initiates or does not initiate a (sidelink) DRX inactivity timer and a (sidelink) DRX retransmission timer or a (sidelink) DRX HARQ RTT timer when UE C (e.g., responding UE C) receives shared COT information from UE A (e.g., COT initiating UE A) and confirms that its own source layer-1 ID is included in an additional ID field may be left to UE implementation. For example, a (sidelink) inactivity timer and/or a (sidelink) retransmission timer may be a timer related to an active time. For example, a (sidelink) DRX inactivity timer may be a duration that extends a (sidelink) DRX onduration duration that is a duration in which a UE that performs a (sidelink) DRX operation basically has to operate in an active time in order to receive the PSCCH/PSSCH of a peer UE. For example, a (sidelink) DRX onduration timer may be extended by a (sidelink) DRX inactivity timer duration. For example, when a UE receives a PSCCH (1^{st} SCI and 2^{nd} SCI) for a new TB from a peer UE or receives a new packet (new PSSCH transmission), the UE may initiate a (sidelink) DRX inactivity timer to extend a (sidelink) DRX onduration timer. For example, a (sidelink) DRX retransmission timer may be a duration in which a UE that performs a (sidelink) DRX operation operates in an active time in order to receive a retransmission packet (e.g., a PSSCH assignment) that a peer UE transmits. For example, during a (sidelink) DRX retransmission timer duration, the UE may monitor reception of a retransmission sidelink packet (e.g., or a PSSCH assignment) that a peer UE transmits.

During an active time, an additional device corresponding to an additional ID may receive a signal of the PSCCH and/or the PSSCH. This optimized reception time may guarantee that the additional device corresponding to the additional ID consumes resources and battery power only when it receives an actual data transmission, thereby improving overall energy efficiency and extending device lifetime. By allowing an additional device corresponding to the additional ID to have a specific active time during which the PSCCH and/or the PSSCH can be received, the system may enhance sidelink communication capabilities for Vehicle-to-Everything (V2X) communication, public safety messages, and other direct device-to-device interactions without network infrastructure. By initiating an active time of an additional device corresponding to the additional ID in alignment with its reception capability, a network may better coordinate information distribution and scheduling. This may promote more organized and efficient network usage and may enable smooth operation and improved user experience in congested or highly dynamic environments. By adjusting initiation of an active time of an additional device corresponding to the additional ID so as to match specific channel occupancy (COT) requirements, this method may minimize redundancy of signal transmissions and may reduce a possibility of interference between devices. This may result in cleaner signal paths and higher data integrity, which may be essential for maintaining robust communication links in critical applications.

For example, when UE C (e.g., responding UE C) is a UE that performs a (sidelink) DRX operation, UE C (e.g., responding UE C) may, when it receives shared COT information from UE A (e.g., COT initiating UE A) and confirms that its own source layer-1 ID or source layer-2 ID is included in an additional ID field, maintain an active time from a time point at which it receives a shared COT (e.g., a 2^{nd} SCI, a MAC CE, or a PC5 RRC) to a time point before an offset time. For example, an offset value may be configured in advance by a base station for a UE or may be pre-configured (e.g., Pre-configuration). For example, an offset value may be configured per logical channel group or logical channel or (sidelink) priority or PFI (e.g., PC5 QoS Flow Identifier) or PQI (e.g., PC5 5QI) or QoS flow or (sidelink) CAPC priority. For example, an offset value may be configured (e.g., implicitly) by the UE as a value greater than or equal to or equal to a minimum processing time required for UE C (e.g., responding UE C) to decode a 2^{nd} SCI, a MAC CE, or a PC5 RRC message (e.g., PSSCH) including shared COT information that UE C receives. For example, although UE C (e.g., responding UE C) knows that UE A (e.g., COT initiating UE A) will not transmit (sidelink) data to it during a shared COT duration, UE C (e.g., responding UE C) may have to operate in a DRX active time before a shared COT starts and monitor a PSCCH/PSSCH that UE A (e.g., COT initiating UE A) transmits because UE A may transmit (sidelink) data to UE C before a shared COT starts.

For example, when UE C (e.g., responding UE C) is a UE that performs a (sidelink) DRX operation, UE C (e.g., responding UE C) may, when it receives shared COT information from UE A (e.g., COT initiating UE A) and confirms that its own source layer-1 ID or source layer-2 ID is included in an additional ID field, not operate in a DRX active time during a COT duration of a shared COT from a time point after an offset time from a time point at which it receives a shared COT (e.g., a 2^{nd} SCI, a MAC CE, or a PC5 RRC) (e.g., may not monitor a PSCCH/PSSCH of UE A (e.g., COT initiating UE A) during the COT duration). For example, when UE C (e.g., responding UE C) is a UE that performs a (sidelink) DRX operation, UE C (e.g., responding UE C) may, when it receives shared COT information from UE A (e.g., COT initiating UE A) and confirms that its own source layer-1 ID or source layer-2 ID is included in an additional ID field, operate in a DRX active time during a COT duration of a shared COT from a time point after an offset time from a time point at which it receives a shared COT (e.g., a 2^{nd} SCI, a MAC CE, or a PC5 RRC) (e.g., may perform a PSCCH/PSSCH monitoring operation of UE A (e.g., COT initiating UE A) during the COT duration).

For example, in the present disclosure, the following Uu DRX timers may be used for the following purposes.
- DRX HARQ RTT timer (SL) (e.g., drx-HARQ-RTT-TimerSL): a duration in which a Tx UE (e.g., a UE that supports a Uu DRX operation) that performs (sidelink) communication based on (sidelink) resource allocation mode 1 does not perform PDCCH (e.g., or DCI) monitoring for (sidelink) mode 1 resource allocation from a base station.
- DRX Retransmission timer (SL) (e.g., drx-RetransmissionTimerSL): a duration in which a Tx UE (e.g., a UE that supports a Uu DRX operation) that performs (sidelink) communication based on (sidelink) resource allocation mode 1 performs PDCCH (e.g., or DCI) monitoring for (sidelink) mode 1 resource allocation from a base station.

For example, in the present disclosure, the following (sidelink) DRX timers may be used for the following purposes.
- (Sidelink) DRX onduration timer: a duration in which a UE that performs a (sidelink) DRX operation basically has to operate in an active time in order to receive the PSCCH/PSSCH of a peer UE.
- (Sidelink) DRX inactivity timer: a duration that extends a (sidelink) DRX onduration duration that is a duration in which a UE that performs a (sidelink) DRX operation basically has to operate in an active time in order to receive the PSCCH/PSSCH of a peer UE. For example, a (sidelink) DRX onduration timer may be extended by a (sidelink) DRX inactivity timer duration. For example, when a UE receives a PSCCH (1^{st} SCI and 2^{nd} SCI) for a new TB from a peer UE or receives a new packet (new PSSCH transmission), the UE may initiate a (sidelink) DRX inactivity timer to extend a (sidelink) DRX onduration timer.
- (Sidelink) DRX HARQ RTT timer: a duration in which a UE that performs a (sidelink) DRX operation operates in a sleep mode until it receives a retransmission packet (e.g., a PSSCH assignment) that a peer UE transmits. For example, when a UE initiates a (sidelink) DRX HARQ RTT timer, the UE may determine that a peer UE will not transmit a sidelink retransmission packet to the UE until the (sidelink) DRX HARQ RTT timer expires and may operate in a sleep mode during the timer (e.g., or may not perform monitoring of a sidelink channel/signal that a Tx UE transmits).
- (Sidelink) DRX retransmission timer: a duration in which a UE that performs a (sidelink) DRX operation operates in an active time in order to receive a retransmission packet (e.g., a PSSCH assignment) that a peer UE transmits. For example, during a (sidelink) DRX retransmission timer duration, the UE may monitor reception of a retransmission sidelink packet (e.g., or a PSSCH assignment) that a peer UE transmits.

For example, in the present disclosure, names of timers (e.g., a (sidelink) DRX onduration timer, a (sidelink) DRX inactivity timer, a (sidelink) DRX HARQ RTT timer, a (sidelink) DRX retransmission timer, and so on) are exemplary, and timers that perform the same/similar function based on descriptions of the respective timers may be regarded as the same/similar timers regardless of the names thereof.

The operation of the present disclosure may be applied to all (sidelink) unicast/groupcast/broadcast operations.

In an embodiment of the present disclosure, "channel" may be applied by replacing "carrier" or "resource block set of a specific carrier" or "band".

In the present disclosure, multi-carrier may be interpreted as carrier aggregation (CA).

In the present disclosure, sidelink multi-carrier may be broadly interpreted as sidelink carrier aggregation (CA). In the present disclosure, sidelink carrier aggregation (CA) may be broadly interpreted as sidelink multi-carrier.

The (sidelink) resource pool (e.g., or (sidelink) HARQ entity) exemplified in the present disclosure may be interpreted as a sidelink resource pool (e.g., or a sidelink HARQ entity) for a specific sidelink carrier.

In (sidelink) multi-carrier operation, to guarantee HARQ feedback enabled MAC PDU transmission, the base station may be expected by the UE to configure PSFCH resources on at least one of exceptional pool(s) (e.g., or normal TX pool(s) or normal RX pool(s)) on at least one of the sidelink carrier/(SL) BWP/(SL) HARQ entities mapped to the same unicast service or the same source layer-2 ID and destination layer-2 ID pair (e.g., or the same groupcast/broadcast service or the same destination layer-2 ID) among multiple (sidelink) carriers/(SL) BWPs/(SL) HARQ entities. The present disclosure is not limited thereto.

When forming a unicast session or a groupcast or a broadcast session that performs HARQ feedback enabled MAC PDU transmission, the base station may restrict the UE to include at least one carrier that includes exceptional pool(s) (e.g., or normal TX pool(s) or normal RX pool(s)) for which PSFCH resources are configured. The present disclosure is not limited thereto.

When forming a unicast session or a groupcast or a broadcast session that performs HARQ feedback enabled MAC PDU transmission, the UE may be restricted to include at least one carrier that includes exceptional pool(s) (e.g., or normal TX pool(s) or normal RX pool(s)) for which PSFCH resources are configured. The present disclosure is not limited thereto.

In the present disclosure, CBR threshold(s) related to (sidelink) carrier(s)/(SL) BWP(s)/(SL) HARQ entity(s) may be configured per priority, per QoS profile (e.g., PDB, reliability), per (SL) radio bearer, or per logical channel.

In the present disclosure, a (sidelink) carrier may be interpreted as a (sidelink) BWP or a (sidelink) HARQ entity.

In the present disclosure, (sidelink) carrier, (sidelink) BWP, (SL) resource pool, or (sidelink) HARQ entity may be substituted with each other. For example, (sidelink) carrier, (sidelink) BWP, (SL) resource pool, or (sidelink) HARQ entity may be applied by being substituted with each other.

In an embodiment of the present disclosure, a unicast service may be alternatively interpreted as a Source Layer-2 ID and Destination Layer-2 ID pair.

In an embodiment of the present disclosure, a groupcast service may be alternatively interpreted as a Groupcast Destination Layer-2 ID.

In an embodiment of the present disclosure, a broadcast service may be alternatively interpreted as a Broadcast Destination Layer-2 ID.

In an embodiment of the present disclosure, "carrier" may be applied by replacing "band" or "resource block set of a specific carrier" or "resource pool set of a specific carrier" or "channel".

In an embodiment of the present disclosure, the direct communication request (DCR) message and/or the direct communication accept (DCA) message may be interpreted interchangeably as a PC5-S DCR message and/or a PC5-S DCA message.

For example, whether or not (some of) the proposed method/rule of the present disclosure is applied and/or related parameter(s) (e.g., threshold value(s)) may be configured (differently or independently) for each SL-Channel Access Priority Class (CAPC). For example, whether or not the (some) proposed method/rule of the present disclosure is applied and/or related parameter(s) (e.g., threshold value(s)) may be configured (differently or independently) for each SL-LBT type (e.g., Type 1 LBT, Type 2A LBT, Type 2B LBT, Type 2C LBT). For example, whether or not the (some) proposed method/rule of the present disclosure is applied and/or related parameter(s) (e.g., threshold value(s)) may be configured specifically (or differently or independently) depending on whether or not Frame Based LBT is applied. For example, whether or not the (some) proposed method/rule of the present disclosure is applied and/or related parameter(s) (e.g., threshold value(s)) may be configured specifically (or differently or independently) depending on whether or not Load Based LBT is applied.

For example, whether or not (some of) the proposed schemes/rules of the present disclosure are applied and/or related parameters (e.g., thresholds) may be specifically (or differently or independently) configured based on whether LBT succeeds/fails, per LBT-related energy detection levels, per sidelink channels (PSCCH/PSSCH, PSFCH, SL-SSB (or S-SSB)), based on whether MCSt (Multi-Consecutive Slot Transmission) is applied, based on whether multi-PSFCH occasions are applied, based on resource order/location consist of MCSt, based on whether multiple starting points are configured within one slot, based on whether the 1^{st} starting point (or 2^{nd} starting point) is applied, etc.

Whether or not (some of) the proposed schemes/rules of the present disclosure are applied and/or related parameters (e.g., thresholds) may be specifically (or differently or independently) configured based on whether LBT succeeds/fails, per LBT-related energy detection levels, per sidelink channels (PSCCH/PSSCH, PSFCH, SL-SSB (or S-SSB)), based on whether MCSt (multi-consecutive slot transmission) is applied, based on whether multi-PSFCH occasions are applied, based on resource order/location consist of MCSt, based on whether multiple starting points are configured within one slot, based on whether the 1^{st} starting point (or 2^{nd} starting point) is applied, etc.

For example, the present disclosure (whether or not (some of) the proposed method/rule of the present disclosure is applied and/or related parameter(s) (e.g., threshold value(s))) may be configured (differently or independently) for each resource pool. For example, the present disclosure (whether or not (some of) the proposed method/rule of the present disclosure is applied and/or related parameter(s) (e.g., threshold value(s))) may be configured (differently or independently) for each congestion level. For example, the present disclosure (whether or not (some of) the proposed method/rule of the present disclosure is applied and/or related parameter(s) (e.g., threshold value(s))) may be configured (differently or independently) for each service priority. For example, the present disclosure (whether or not (some of) the proposed method/rule of the present disclosure is applied and/or related parameter(s) (e.g., threshold value(s))) may be configured (differently or independently) for each service type. For example, the present disclosure (whether or not (some of) the proposed method/rule of the present disclosure is applied and/or related parameter(s) (e.g., threshold value(s))) may be configured (differently or independently) for each QoS requirement (e.g., latency, reliability). For example, the present disclosure (whether or not (some of) the proposed method/rule of the present disclosure is applied and/or related parameter(s) (e.g., threshold value(s))) may be configured (differently or independently) for each PQI (5G QoS identifier (5QI) for PC5). For example, the present disclosure (whether or not (some of) the proposed method/rule of the present disclosure is applied and/or related parameter(s) (e.g., threshold value(s))) may be configured (differently or independently) for each traffic type (e.g., periodic generation or aperiodic generation). For example, the present disclosure (whether or not (some of) the proposed method/rule of the present disclosure is applied and/or related parameter(s) (e.g., threshold value(s))) may be configured (differently or independently) for each SL transmission resource allocation mode (e.g., mode 1 or mode 2). For example, the present disclosure (whether or not (some of) the proposed method/rule of the present disclosure is applied and/or related parameter(s) (e.g., threshold value(s))) may be configured (differently or independently) for each Tx profile (e.g., a Tx profile indicating that a service supports sidelink DRX operation or a Tx profile indicating that a service does not need to support sidelink DRX operation).

For example, the present disclosure (e.g., whether or not the proposed rule is applied (and/or a related parameter configured value)) may be specifically (and/or independently and/or differently) configured for at least one of: whether to support PUCCH configuration (e.g., in a case where a PUCCH resource is configured or in a case where a PUCCH resource is not configured), a resource pool (e.g., a resource pool where a PSFCH is configured, or a resource pool where a PSFCH is not configured), service/packet type (and/or priority), a QoS profile or QoS requirement (e.g., URLLC/eMBB traffic, reliability, latency), PQI, PFI, cast type (e.g., unicast, groupcast, broadcast), a congestion level of a resource pool (e.g., CBR), SL HARQ feedback scheme (e.g., NACK-only feedback, ACK/NACK feedback), a case of transmitting a HARQ feedback enabled MAC PDU (and/or a HARQ feedback disabled MAC PDU), whether to configure a PUCCH-based SL HARQ feedback reporting operation, a case of (non-)performing pre-emption (and/or re-evaluation) (or resource reselection based thereon), (L2 or L1) identifiers (source and/or destination), (L2 or L1) identifiers of a combination of source layer ID and destination layer ID, identifiers of a combination of a pair of source layer ID and destination layer ID and a cast type, a direction of a pair of source layer ID and destination layer ID, PC5 RRC connection/link, a case of (non-)performing (or supporting) SL DRX, an SL mode type (resource allocation mode 1, resource allocation mode 2), (non-)performing periodic resource reservation, and a Tx profile (e.g., a Tx profile indicating that the service supports sidelink DRX operation, or a Tx profile indicating that the service does not need to support sidelink DRX operation).

The proposal and whether or not the proposal rule of the present disclosure is applied (and/or related parameter configuration value(s)) may also be applied to a mmWave (SL) operation.

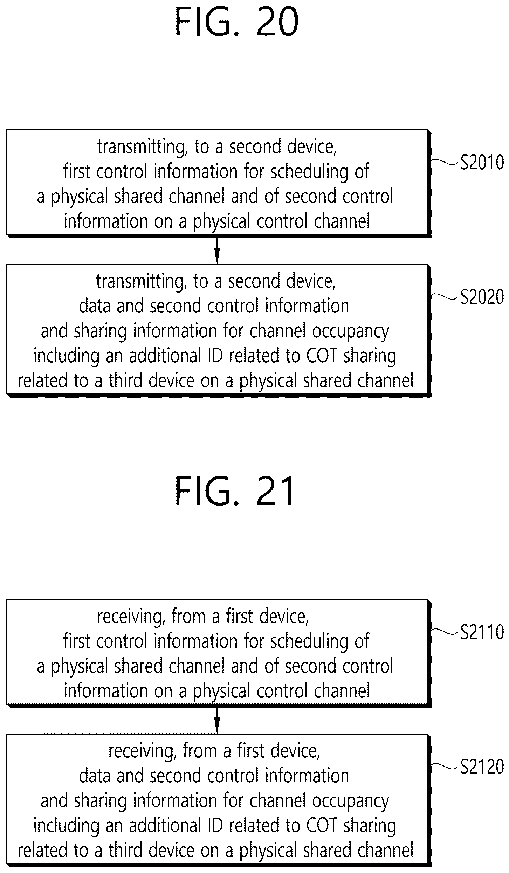

FIG. 20 shows a method for a first device to perform wireless communication, based on an embodiment of the present disclosure. The embodiment of FIG. 20 may be combined with various embodiments of the present disclosure.

Referring to FIG. 20, in step S2010, the first device may transmit, to a second device, first control information for scheduling of a physical shared channel and of second control information on a physical control channel. In step S2020, the first device may transmit, to the second device, data and the second control information and sharing information for channel occupancy including an additional identity (ID) related to channel occupancy time (COT) sharing related to a third device on the physical shared channel. For example, based on that the data and the second control information including the sharing information for channel occupancy and the additional ID for the COT sharing related to the third device has been transmitted, a timer related to an active time of the third device may be initiated.

For example, the timer related to the active time of the third device may be an inactivity timer of the third device.

For example, the timer related to the active time of the third device may be a retransmission timer of the third device.

For example, the timer related to the active time of the third device may be a hybrid automatic repeat request (HARQ) retransmission timer of the third device.

For example, the sharing information for channel occupancy may include a cast type of the additional ID for the COT sharing related to the third device.

For example, based on that the cast type of the additional ID for the COT sharing related to the third device includes information for unicast, unicast reception may be received from the third device.

For example, based on that the cast type of the additional ID for the COT sharing related to the third device includes information for groupcast, groupcast reception may be received from the third device.

For example, based on that the cast type of the additional ID for the COT sharing related to the third device includes information for broadcast, broadcast reception may be received from the third device.

For example, the additional ID for the COT sharing related to the third device may be related to a layer 1 ID of the third device.

For example, the layer 1 ID of the third device may be related to a layer 1 source ID of the third device.

For example, the sharing information for channel occupancy may include the additional ID for the COT sharing related to the third device is transmitted to the third device.

For example, the first control information may be first sidelink control information (SCI). For example, the second control information may be second SCI. For example, the physical control channel may be physical sidelink control channel (PSCCH). For example, the physical shared channel may be physical sidelink shared channel (PSSCH). For example, the active time may be related to sidelink.

For example, the active time may be related to a time for monitoring to receive at least one of the PSCCH or the PSSCH.

The proposed method can be applied to the device, based on various embodiments of the present disclosure. First, the processor 102 of the first device 100 may control the transceiver 106 to transmit, to a second device, first control information for scheduling of a physical shared channel and of second control information on a physical control channel. In addition, the processor 102 of the first device 100 may control the transceiver 106 to transmit, to the second device, data and the second control information and sharing information for channel occupancy including an additional identity (ID) related to channel occupancy time (COT) sharing related to a third device on the physical shared channel. For example, based on that the data and the second control information including the sharing information for channel occupancy and the additional ID for the COT sharing related to the third device has been transmitted, a timer related to an active time of the third device may be initiated.

Based on an embodiment of the present disclosure, a first device adapted to perform wireless communication may be provided. For example, the first device may include: at least one transceiver; at least one processor; and at least one memory connected to the at least one processor and storing instructions. For example, the instructions, based on being executed by the at least one processor, may cause the first device to perform operations comprising: transmitting, to a second device, first control information for scheduling of a physical shared channel and of second control information on a physical control channel; and transmitting, to the second device, data and the second control information and sharing information for channel occupancy including an additional identity (ID) related to channel occupancy time (COT) sharing related to a third device on the physical shared channel. For example, based on that the data and the second control information including the sharing information for channel occupancy and the additional ID for the COT sharing related to the third device has been transmitted, a timer related to an active time of the third device may be initiated.

Based on an embodiment of the present disclosure, a processing device adapted to control a first device may be provided. The processing device may include: at least one processor; and at least one memory connected to the at least one processor and storing instructions. For example, the instructions, based on being executed by the at least one processor, may cause the first device to perform operations comprising: transmitting, to a second device, first control information for scheduling of a physical shared channel and of second control information on a physical control channel; and transmitting, to the second device, data and the second control information and sharing information for channel occupancy including an additional identity (ID) related to channel occupancy time (COT) sharing related to a third device on the physical shared channel. For example, based on that the data and the second control information including the sharing information for channel occupancy and the additional ID for the COT sharing related to the third device has been transmitted, a timer related to an active time of the third device may be initiated.

Based on an embodiment of the present disclosure, a non-transitory computer-readable storage medium storing instructions may be provided. For example, the instructions, based on being executed, may cause a first device to perform operations comprising: transmitting, to a second device, first control information for scheduling of a physical shared channel and of second control information on a physical control channel; and transmitting, to the second device, data and the second control information and sharing information for channel occupancy including an additional identity (ID) related to channel occupancy time (COT) sharing related to a third device on the physical shared channel. For example, based on that the data and the second control information including the sharing information for channel occupancy and the additional ID for the COT sharing related to the third device has been transmitted, a timer related to an active time of the third device may be initiated.

FIG. 21 shows a method for a second device to perform wireless communication, based on an embodiment of the present disclosure. The embodiment of FIG. 21 may be combined with various embodiments of the present disclosure.

Referring to FIG. 21, in step S2110, the second device may receive, from a first device, first control information for scheduling of a physical shared channel and of second control information on a physical control channel. In step S2120, the second device may receive, from the first device, data and the second control information and sharing information for channel occupancy including an additional identity (ID) related to channel occupancy time (COT) sharing related to a third device on the physical shared channel. For example, based on that the data and the second control information including the sharing information for channel occupancy and the additional ID for the COT sharing related to the third device has been received, a timer related to an active time of the third device may be initiated.

For example, the timer related to the active time of the third device may be an inactivity timer of the third device.

For example, the timer related to the active time of the third device may be a retransmission timer of the third device.

For example, the timer related to the active time of the third device may be a hybrid automatic repeat request (HARQ) retransmission timer of the third device.

For example, the sharing information for channel occupancy may include a cast type of the additional ID for the COT sharing related to the third device.

For example, based on that the cast type of the additional ID for the COT sharing related to the third device includes information for unicast, unicast transmission may be transmitted from the third device.

For example, based on that the cast type of the additional ID for the COT sharing related to the third device includes information for groupcast, groupcast transmission may be transmitted from the third device.

For example, based on that the cast type of the additional ID for the COT sharing related to the third device includes information for broadcast, broadcast transmission may be transmitted from the third device.

For example, the additional ID for the COT sharing related to the third device may be related to a layer 1 ID of the third device.

For example, the layer 1 ID of the third device may be related to a layer 1 source ID of the third device.

For example, the sharing information for channel occupancy may include the additional ID for the COT sharing related to the third device is transmitted to the third device.

For example, the first control information may be first sidelink control information (SCI). For example, the second control information may be second SCI. For example, the physical control channel may be physical sidelink control channel (PSCCH). For example, the physical shared channel may be physical sidelink shared channel (PSSCH). For example, the active time may be related to sidelink.

For example, the active time may be related to a time for monitoring to receive at least one of the PSCCH or the PSSCH.

The proposed method can be applied to the device, based on various embodiments of the present disclosure. First, the processor 202 of the second device 200 may control the transceiver 206 to receive, from a first device, first control information for scheduling of a physical shared channel and of second control information on a physical control channel. In addition, the processor 202 of the second device 200 may control the transceiver 206 to receive, from the first device, data and the second control information and sharing information for channel occupancy including an additional identity (ID) related to channel occupancy time (COT) sharing related to a third device on the physical shared channel. For example, based on that the data and the second control information including the sharing information for channel occupancy and the additional ID for the COT sharing related to the third device has been received, a timer related to an active time of the third device may be initiated.

Based on an embodiment of the present disclosure, a second device adapted to perform wireless communication may be provided. For example, the second device may include: at least one transceiver; at least one processor; and at least one memory connected to the at least one processor and storing instructions. For example, the instructions, based on being executed by the at least one processor, may cause the second device to perform operations comprising: receiving, from a first device, first control information for scheduling of a physical shared channel and of second control information on a physical control channel; and receiving, from the first device, data and the second control information and sharing information for channel occupancy including an additional identity (ID) related to channel occupancy time (COT) sharing related to a third device on the physical shared channel. For example, based on that the data and the second control information including the sharing information for channel occupancy and the additional ID for the COT sharing related to the third device has been received, a timer related to an active time of the third device may be initiated.

Based on an embodiment of the present disclosure, a processing device adapted to control a second device may be provided. The processing device may include: at least one processor; and at least one memory connected to the at least one processor and storing instructions. For example, the instructions, based on being executed by the at least one processor, may cause the second device to perform operations comprising: receiving, from a first device, first control information for scheduling of a physical shared channel and of second control information on a physical control channel; and receiving, from the first device, data and the second control information and sharing information for channel occupancy including an additional identity (ID) related to channel occupancy time (COT) sharing related to a third device on the physical shared channel. For example, based on that the data and the second control information including the sharing information for channel occupancy and the additional ID for the COT sharing related to the third device has been received, a timer related to an active time of the third device may be initiated.

Based on an embodiment of the present disclosure, a non-transitory computer-readable storage medium storing instructions may be provided. For example, the instructions, based on being executed, may cause a second device to perform operations comprising: receiving, from a first device, first control information for scheduling of a physical shared channel and of second control information on a physical control channel; and receiving, from the first device, data and the second control information and sharing information for channel occupancy including an additional identity (ID) related to channel occupancy time (COT) sharing related to a third device on the physical shared channel. For example, based on that the data and the second control information including the sharing information for channel occupancy and the additional ID for the COT sharing related to the third device has been received, a timer related to an active time of the third device may be initiated.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

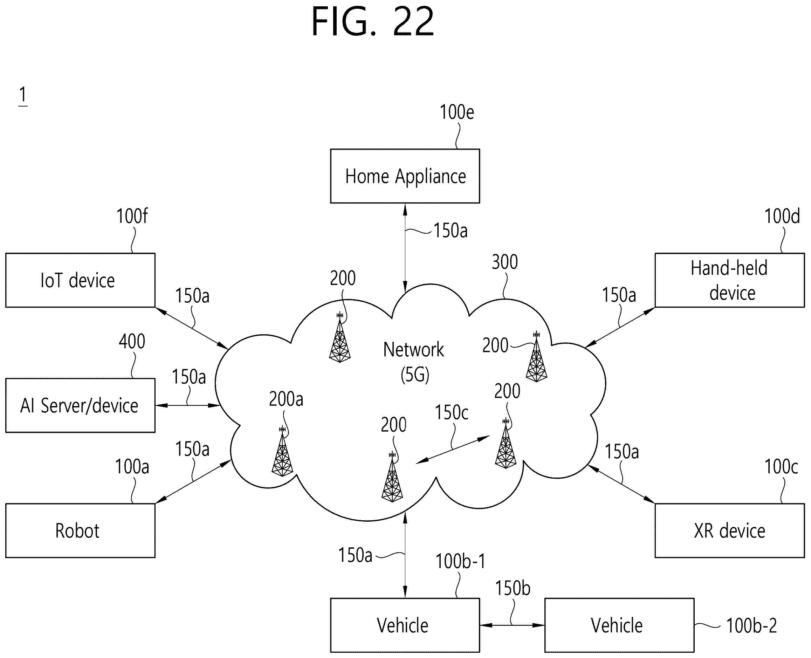

FIG. 22 shows a communication system 1, based on an embodiment of the present disclosure. The embodiment of FIG. 22 may be combined with various embodiments of the present disclosure.

Referring to FIG. 22, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

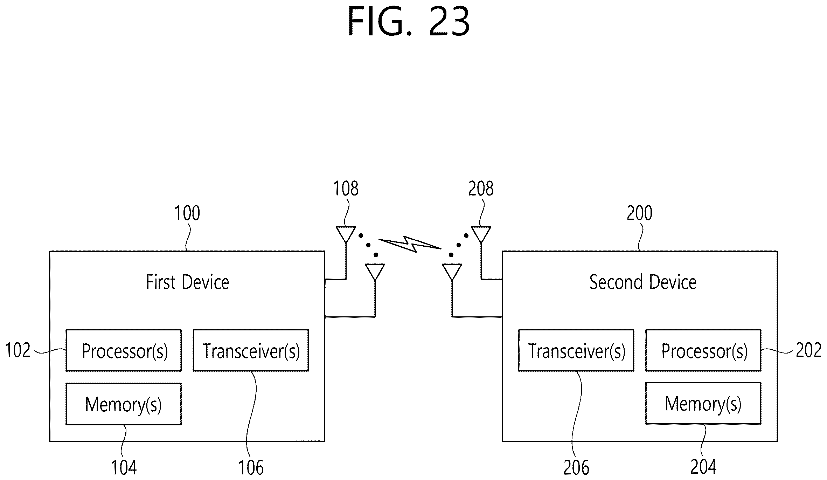

FIG. 23 shows wireless devices, based on an embodiment of the present disclosure. The embodiment of FIG. 23 may be combined with various embodiments of the present disclosure.

Referring to FIG. 23, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 22.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

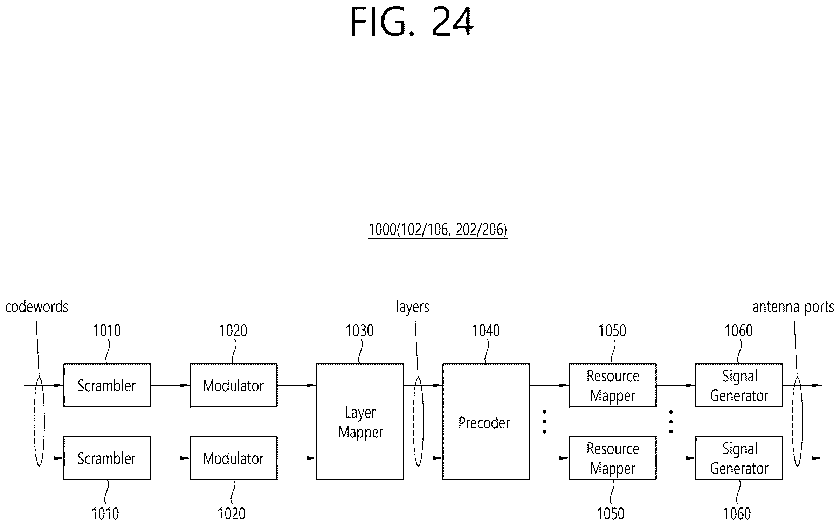

FIG. 24 shows a signal process circuit for a transmission signal, based on an embodiment of the present disclosure. The embodiment of FIG. 24 may be combined with various embodiments of the present disclosure.

Referring to FIG. 24, a signal processing circuit 1000 may include scramblers 1010, modulators 1020, a layer mapper 1030, a precoder 1040, resource mappers 1050, and signal generators 1060. An operation/function of FIG. 24 may be performed, without being limited to, the processors 102 and 202 and/or the transceivers 106 and 206 of FIG. 23. Hardware elements of FIG. 24 may be implemented by the processors 102 and 202 and/or the transceivers 106 and 206 of FIG. 23. For example, blocks 1010 to 1060 may be implemented by the processors 102 and 202 of FIG. 23. Alternatively, the blocks 1010 to 1050 may be implemented by the processors 102 and 202 of FIG. 23 and the block 1060 may be implemented by the transceivers 106 and 206 of FIG. 23.

Codewords may be converted into radio signals via the signal processing circuit 1000 of FIG. 24. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 24. For example, the wireless devices (e.g., 100 and 200 of FIG. 23) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

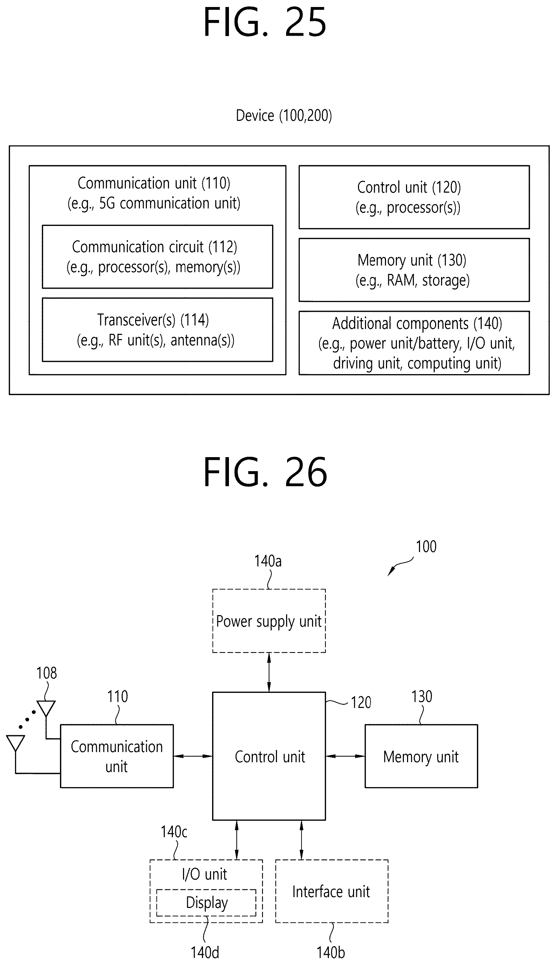

FIG. 25 shows another example of a wireless device, based on an embodiment of the present disclosure. The wireless device may be implemented in various forms according to a use-case/service (refer to FIG. 22). The embodiment of FIG. 25 may be combined with various embodiments of the present disclosure.

Referring to FIG. 25, wireless devices 100 and 200 may correspond to the wireless devices 100 and 200 of FIG. 23 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 23. For example, the transceiver(s) 114 may include the one or more transceivers 106 and 206 and/or the one or more antennas 108 and 208 of FIG. 23. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 22), the vehicles (100b-1 and 100b-2 of FIG. 22), the XR device (100c of FIG. 22), the hand-held device (100d of FIG. 22), the home appliance (100e of FIG. 22), the IoT device (100f of FIG. 22), a digital broadcast terminal, a hologram device, a public safety device, an MTC device, a medicine device, a fintech device (or a finance device), a security device, a climate/environment device, the AI server/device (400 of FIG. 22), the BSs (200 of FIG. 22), a network node, etc. The wireless device may be used in a mobile or fixed place according to a use-example/service.

In FIG. 25, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 25 will be described in detail with reference to the drawings.

FIG. 26 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 26 may be combined with various embodiments of the present disclosure.

Referring to FIG. 26, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 25, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

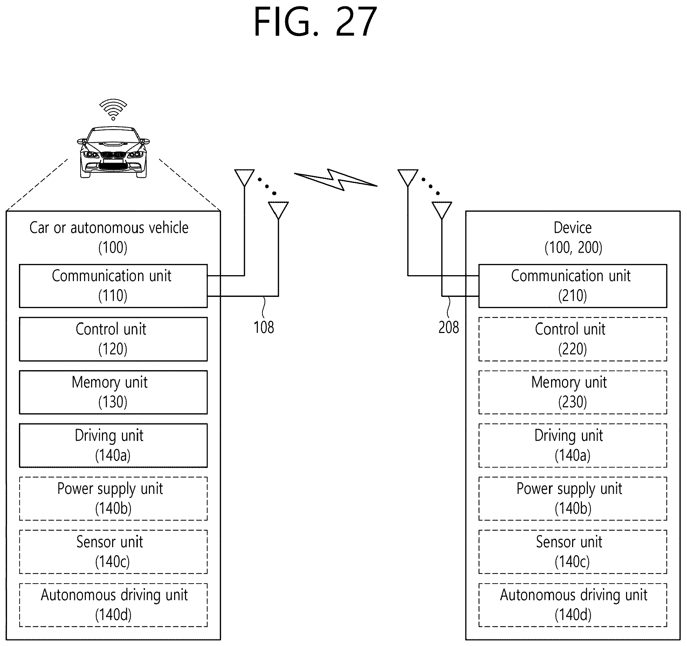

FIG. 27 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 27 may be combined with various embodiments of the present disclosure.

Referring to FIG. 27, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 25, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method performed by a first device in a wireless communication system, the method comprising:
transmitting, to a second device, first control information for scheduling of a physical shared channel and of second control information on a physical control channel; and
transmitting, to the second device, data and the second control information and sharing information for channel occupancy including an additional identity (ID) related to channel occupancy time (COT) sharing related to a third device on the physical shared channel;
wherein, based on that the data and the second control information including the sharing information for channel occupancy and the additional ID for the COT sharing related to the third device has been transmitted, a timer related to an active time of the third device is initiated.

2. The method of claim 1,
wherein the timer related to the active time of the third device is an inactivity timer of the third device.

3. The method of claim 1,
wherein the timer related to the active time of the third device is a retransmission timer of the third device.

4. The method of claim 3,
wherein the timer related to the active time of the third device is a hybrid automatic repeat request (HARQ) retransmission timer of the third device.

5. The method of claim 1,
wherein the sharing information for channel occupancy includes a cast type of the additional ID for the COT sharing related to the third device.

6. The method of claim 5,
wherein, based on that the cast type of the additional ID for the COT sharing related to the third device includes information for unicast, unicast reception is received from the third device.

7. The method of claim 5,
wherein, based on that the cast type of the additional ID for the COT sharing related to the third device includes information for groupcast, groupcast reception is received from the third device.

8. The method of claim 5,
wherein, based on that the cast type of the additional ID for the COT sharing related to the third device includes information for broadcast, broadcast reception is received from the third device.

9. The method of claim 1,
wherein the additional ID for the COT sharing related to the third device is related to a layer 1 ID of the third device.

10. The method of claim 9,
wherein the layer 1 ID of the third device is related to a layer 1 source ID of the third device.

11. The method of claim 1,
wherein the sharing information for channel occupancy including the additional ID for the COT sharing related to the third device is transmitted to the third device.

12. The method of claim 1,
wherein the first control information is first sidelink control information (SCI),
wherein the second control information is second SCI,
wherein the physical control channel is physical sidelink control channel (PSCCH),
wherein the physical shared channel is physical sidelink shared channel (PSSCH), and
wherein the active time is related to sidelink.

13. The method of claim 12,
wherein the active time is related to a time for monitoring to receive at least one of the PSCCH or the PSSCH.

14. A first device adapted to perform wireless communication, the first device comprising:
at least one transceiver;
at least one processor; and
at least one memory connected to the at least one processor and storing instructions that, based on being executed by the at least one processor, cause the first device to perform operations comprising:
transmitting, to a second device, first control information for scheduling of a physical shared channel and of second control information on a physical control channel; and
transmitting, to the second device, data and the second control information and sharing information for channel occupancy including an additional identity (ID) related to channel occupancy time (COT) sharing related to a third device on the physical shared channel;
wherein, based on that the data and the second control information including the sharing information for channel occupancy and the additional ID for the COT sharing related to the third device has been transmitted, a timer related to an active time of the third device is initiated.

15. A processing device adapted to control a first device, the processing device comprising:
at least one processor; and
at least one memory connected to the at least one processor and storing instructions that, based on being executed by the at least one processor, cause the first device to perform operations comprising:
transmitting, to a second device, first control information for scheduling of a physical shared channel and of second control information on a physical control channel; and
transmitting, to the second device, data and the second control information and sharing information for channel occupancy including an additional identity (ID) related to channel occupancy time (COT) sharing related to a third device on the physical shared channel;
wherein, based on that the data and the second control information including the sharing information for channel occupancy and the additional ID for the COT sharing related to the third device has been transmitted, a timer related to an active time of the third device is initiated.

16. A non-transitory computer-readable storage medium storing instructions that, based on being executed, cause a first device to perform operations comprising:
transmitting, to a second device, first control information for scheduling of a physical shared channel and of second control information on a physical control channel; and
transmitting, to the second device, data and the second control information and sharing information for channel occupancy including an additional identity (ID) related to channel occupancy time (COT) sharing related to a third device on the physical shared channel;
wherein, based on that the data and the second control information including the sharing information for channel occupancy and the additional ID for the COT sharing related to the third device has been transmitted, a timer related to an active time of the third device is initiated.

17. A method performed by a second device in a wireless communication system, the method comprising:
receiving, from a first device, first control information for scheduling of a physical shared channel and of second control information on a physical control channel; and
receiving, from the first device, data and the second control information and sharing information for channel occupancy including an additional identity (ID) related to channel occupancy time (COT) sharing related to a third device on the physical shared channel;
wherein, based on that the data and the second control information including the sharing information for channel occupancy and the additional ID for the COT sharing related to the third device has been received, a timer related to an active time of the third device is initiated.

18. A second device adapted to perform wireless communication, the second device comprising:
at least one transceiver;
at least one processor; and
at least one memory connected to the at least one processor and storing instructions that, based on being executed by the at least one processor, cause the second device to perform operations comprising:
receiving, from a first device, first control information for scheduling of a physical shared channel and of second control information on a physical control channel; and
receiving, from the first device, data and the second control information and sharing information for channel occupancy including an additional identity (ID) related to channel occupancy time (COT) sharing related to a third device on the physical shared channel;
wherein, based on that the data and the second control information including the sharing information for channel occupancy and the additional ID for the COT sharing related to the third device has been received, a timer related to an active time of the third device is initiated.

19. A processing device adapted to control a second device, the processing device comprising:
at least one processor; and
at least one memory connected to the at least one processor and storing instructions that, based on being executed by the at least one processor, cause the second device to perform operations comprising:
receiving, from a first device, first control information for scheduling of a physical shared channel and of second control information on a physical control channel; and
receiving, from the first device, data and the second control information and sharing information for channel occupancy including an additional identity (ID) related to channel occupancy time (COT) sharing related to a third device on the physical shared channel;
wherein, based on that the data and the second control information including the sharing information for channel occupancy and the additional ID for the COT sharing related to the third device has been received, a timer related to an active time of the third device is initiated.

20. A non-transitory computer-readable storage medium storing instructions that, based on being executed, cause a second device to perform operations comprising:
receiving, from a first device, first control information for scheduling of a physical shared channel and of second control information on a physical control channel; and
receiving, from the first device, data and the second control information and sharing information for channel occupancy including an additional identity (ID) related to channel occupancy time (COT) sharing related to a third device on the physical shared channel;
wherein, based on that the data and the second control information including the sharing information for channel occupancy and the additional ID for the COT sharing related to the third device has been received, a timer related to an active time of the third device is initiated.
